# EUROPÄISCHE PATENTANMELDUNG

(11) **EP 4 335 737 A1**
(43) Veröffentlichungstag der Anmeldung: **13.03.2024**
(21) Anmeldenummer: 23195841.4
(22) Anmeldetag: 06.09.2023
(51) Int. Cl.: B62K 19/32, B62K 21/06

(54) **ANSCHLUSSVORRICHTUNG ZUM KUPPELN EINES FAHRRADRAHMENS MIT EINEM FAHRRADVORDERTEIL, SOWIE EIN SET ZUM UMWANDELN EINES FAHRRADS IN EIN LASTENFAHRRAD**

(30) Priorität: 06.09.2022 EP 22020428
(71) Anmelder: Sphaer Bikes GmbH, 22607 Hamburg (DE)
(72) Erfinder: Tomek, Dominik, 21075 Hamburg (DE); Ostrowski, Kolja, 28279 Bremen (DE); Dahms, Constantin, 22607 Hamburg (DE)
(74) Vertreter: Samson & Partner Patentanwälte mbB

(57) **Zusammenfassung**

Die vorliegende Erfindung betrifft eine Anschlussvorrichtung (150) und ein System zum Kuppeln von einem Fahrradrahmen mit einem Fahrradvorderteil (160.4), wobei die Anschlussvorrichtung eingerichtet ist, um zumindest zwei unterschiedliche Fahrradvorderteile austauschbar zu kuppeln. Weiterhin ist ein Set zum Umwandeln eines Fahrrads in ein Lastenfahrrad beschrieben und ein Wechselsystem zum Umwandeln eines Standardfahrrads in ein Lastenfahrrad und umgekehrt.

## Beschreibung

### Gebiet der Erfindung

Diese Offenbarung bezieht sich im Allgemeinen auf das Gebiet von Fahrrädern und insbesondere auf eine Austauschbarkeit von Fahrradvorderteilen mittels einer Anschlussvorrichtung, um beispielsweise ein konventionelles Fahrrad mit wenigen Handgriffen in ein Lastenfahrrad umzuwandeln. Die vorliegende Erfindung stellt dafür eine Anschlussvorrichtung bereit, die ein Verbindungselement an einem Fahrradgrundrahmen schafft, sodass verschiedene Module als Fahrradvorderteile an diesem Fahrradrahmen austauschbar angebracht werden können. Insbesondere stellt die vorliegende Erfindung auch unterschiedlich ausgestaltete Lastenvorderteile bereit, die durch die Anschlussvorrichtung austauschbar an dem Fahrradrahmen anbringbar sind.

### Hintergrund der Erfindung

Aktuell existieren Fahrräder in den verschiedensten Ausführungen und mit unterschiedlichen Funktionen, wobei ein Großteil dieser Fahrräder nur eine Funktion erfüllt. So gibt es u.a. Lastenräder, die dem Transport von Lasten oder Personen dienen und je nach Aufgabe und Einsatzgebiet mit verschiedenen An- und Aufbauten ausgerüstet sind. Diese sind in der Regel komplette Fahrzeuge, die nicht in ihre einzelnen Teilrahmen aufteilbar sind. Zwar gibt es auch Lastenräder, die sich auftrennen und wieder zusammenbauen lassen, doch ist für den Umbau Werkzeug-Einsatz notwendig und die Lenkung des Vorderrades sowie dessen Bremsleitung und andere Leitungen müssen auch noch separat aufgetrennt/zusammengebaut werden.

Die CH 708860 A2 zeigt ein solch umbaubares Lastenrad.

So kann ein Lastenrades, selbst wenn es nur für ganz bestimmte Verwendungen eingesetzt wird und für alle anderen Aufgaben ein anderes Transportmittel! Fahrräder verwendet wird, sicher sehr praktisch und von großen Nutzen sein, wenn denn auch noch genügend Stellfläche für weitere Transportmittel/Fahrräder vorhanden ist. Doch nicht jeder hat ausreichend Stellfläche für mehrere Fahrräder zur Verfügung. Vor diesem Hintergrund ist es eine Aufgabe der Erfindung ein schnell und unkompliziert um- und zurückbaubares Fahrrad/Lastenrad, insbesondere E-Bike/E-Lastenrad bereitzustellen.

So kann mit der vorliegenden Erfindung ein Fahrrad in ein Lastenfahrrad, insbesondere ein E-Bike in ein E-Lastenfahrrad, in nur wenigen Handgriffen und ganz ohne Werkzeug umgebaut werden.

### Zusammenfassung der Erfindung

Diese Aufgabe wird erfindungsgemäß in einem ersten Aspekt gelöst durch ein Set zum Umwandeln eines Fahrrads in ein Lastenfahrrad, insbesondere eines E-Bikes in ein E-Lastenfahrrad, umfassend ein modulares Transportmittel mit einem modularen Vorderteil und eine Anschlussvorrichtung, wobei das Fahrrad, insbesondere das E-Bike, einen Rahmen mit einem Vorbau und eine über ein Steuerrohr am Rahmen befestigte Steuereinheit umfasst, dadurch gekennzeichnet, dass die Anschlussvorrichtung nur aus einer Befestigungskonstruktion besteht. D.h. dass die Anschlussvorrichtung nur eine Kupplung aufweist. Erfindungsgemäß handelt es sich bei dem modularen Transportmittel um ein Transportmittel, das mittels der Anschlussvorrichtung mit dem Rahmen eines Fahrrads verbindbar ist. Das Transportmittel stellt ein Vorderteil des Fahrrads dar, das als Lastenfahrradvorbau bzw. -vorderteil ausgebildet sein kann. Die Anschlussvorrichtung ist derart ausgebildet, dass sich anstelle eines konventionellen Fahrradvorderteils auch ein Lastenfahrradvorderteil austauschbar anbringen lässt, ohne dass hierfür weitere Abstützungspunkt erfoderlich sind. Erfindungsgemäß wird somit durch das Anbringen der Anschlussvorrichtung an einen Fahrradrahmen ein Umbau von einem konventionellen Fahrrad in ein Lastenfahrrad ermöglicht. Unter Fahrradrahmen wird hier ein Rahmen verstanden, der keine Gabel aufweist. Für den Umbau eines Fahrrads in ein Lastenfahrrad wird anstelle des Radvorderteils eines Standardfahrrads ein Transportmittel als Vorderteil an die mit dem Rahmen verbundene Anschlussvorrichtung gekuppelt. Erfindungsgemäß ist die Anschlussvorrichtung ausgebildet, um die Lasten (d.h., die wirkenden Kräfte und Momente) eines gekuppelten Transportmittels, die im Vergleich zu einem gekuppeltem Radvorderteil eines Standardfahrrads größer sind, aufzunehmen.

In einer bevorzugten Ausführungsform des erfindungsgemäßen Sets wird die Anschlussvorrichtung nur an einem Anbindungspunkt, insbesondere an einem vorderen Anbindungspunkt, des Rahmens befestigt. Die Anschlussvorrichtung wird somit nur über einen Punkt mit dem Rahmen verbunden. Mit anderen Worten ausgedrückt kann mittels der erfindungsgemäßen Anschlussvorrichtung - im Gegensatz zu einem Lastenfahrrad, bei dem zur Schaffung ausreichender Systemsteifigkeit eine zusätzliche Abstützung am Tretlager erforderlich ist - auf weitere Anbindungspunkte bzw. Abstützungspunkte zur Verbindung der verschiedenen modularen Fahrradvorbauten verzichtet werden.

In einer weiteren Ausführungsvariante verbleibt die Steuereinheit durchgängig am Rahmen bei der Umwandlung des Fahrrads zu einem Lastenfahrrad, insbesondere des E-Bikes zu einem Elektro-Lastenfahrrad, und wird nicht demontiert. Die Steuereinheit ist somit nicht Bestandteil der Anschlussvorrichtung und/oder des modularen Transportmittels.

In einer anderen Ausführungsvariante kann die Anschlussvorrichtung komplett ohne Werkzeug an dem Rahmen montiert und/oder demontiert werden.

In einer weiteren Ausführungsvariante ist die Anschlussvorrichtung bei der Umwandlung des Fahrrads zu einem Lastenfahrrad, insbesondere des E-Bikes zu einem E-Lastenfahrrad, in das modulare Vorderteil des modularen Transportmittels und/oder dem Steuerrohr des Fahrrads, insbesondere des E-Bikes, integriert. D.h. das Steuerrohr und/oder das modulare Vorderteil sind derart modifiziert, dass ein Feder-Kugel-Verschluss darin untergebracht werden und so das modulare Vorderteil oder das Steuerrohr angekuppelt werden kann.

In einer noch anderen Ausführungsvariante ist die Anschlussvorrichtung eine abstützungsfreie, integrale Tri-Kupplung. D.h. die Anschlussvorrichtung kuppelt den Rahmen mit dem modularen Vorderteil und verbindet dabei sowohl Lasten als auch Hydraulik und Elektrik zwischen Rahmen und modularen Vorderteil ohne zusätzliche Abstützungselemente. Somit bildet die Anschlussvorrichtung einen einzigen Abstützungspunkt, in dem der Rahmen mit dem modularen Vorderteil - auch im Falle als Lastenfahrradvorbau ausgebildeten Transportmittels - gekuppelt wird und erfüllt damit nicht nur die Funktion, auftretende Lasten zu übertragen, sondern ermöglicht auch ein schnelleres Austauschen des Vorderteils gegenüber Systemen mit Mehrpunktabstützungen. Die Anschlussvorrichtung stellt funktional daher eine Kupplung dar. Diese Kupplung ist ausgestaltet verschiedene Vorderteile austauschbar mit der Anschlussvorrichtung zu kuppeln. Die Kupplung zwischen Rahmen und modularem Vorderteil kommt dabei ohne weitere Abstützungselemente aus.

Das Transportmittel weist ferner eine räumliche Erstreckung in eine Längsrichtung auf, wobei die Längsrichtung die Richtung der längsten Erstreckung des Fahrrads darstellt und die Längsrichtung im Wesentlichen parallel zu einer geradlinigen Bewegungs- oder Laufrichtung des Transportmittels ist. Ein Abstand in Längsrichtung zwischen der am Rahmen verorteten Anschlussvorrichtung und dem Schwerpunkt des Transportmittels kann sich (horizontal betrachtet) auf mindestens 0,3 m belaufen. Bei einem Standardfahrrad beläuft sich der (horizontale) Abstand zwischen der Anschlussvorrichtung und dem Schwerpunkt des Radvorderteils üblicherweise auf weniger als 0,3 m.

Das modulare Vorderteil des Transportmittels und der Fahrradrahmen können jeweils mindestens ein Rad aufweisen. Das modulare Vorderteil und der Fahrradrahmen können in einem mittels der Anschlussvorrichtung gekoppelten Zustand einen Radstand zwischen 1,7 und 2,5 m aufweisen. Der Radstand eines Standardfahrrads beläuft sich üblicherweise auf weniger als 1,7 m.

Das Transportmittel ist als Lastenvorderteil zum Tragen von Lasten über das Gewicht des Fahrers hinaus ausgebildet. Unter Fahrer versteht die vorliegende Beschreibung einen Benutzer, der sich auf dem Fahrrad befindet und dieses steuert. Das Transportmittel bzw. das Lastenvorderteil kann ferner einen Lastaufsatz umfassen. Der Lastaufsatz kann zum Transport eines Körpers von bis zu mehreren Hundert Kilogramm eingerichtet sein. In manchen Ausführungsformen ist das Transportmittel zum Tragen von Lasten bis zu 500 kg eingerichtet.

In einer optionalen Ausführungsform des erfindungsgemäßen Sets umfasst die Anschlussvorrichtung ein erstes äußeres Gehäuse, ein zweites inneres Gehäuse, einen oder mehrere Schieber, einen oder mehrere Deckel, eine oder mehrere Wellen eine oder mehrere Federn und/oder zwei oder mehrere Kugeln.

Ferner weist die Anschlussvorrichtung einen Feder-Kugelverschluss auf. Die Verbindung des modularen Transportmittels mit dem Rahmen über die Anschlussvorrichtung erfolgt also über federgelagerte Kugeln.

In einem weiteren Aspekt verbindet die Anschlussvorrichtung Stromanschlüsse, transferiert Lasten und/oder ermöglicht Bewegungskopplungen. So sind in der Anschlussvorrichtung hydraulische und stromführende Leitungen integriert.

In einer optionalen Ausführungsform des erfindungsgemäßen Sets umfasst das modulare Vorderteil des modularen Transportmittels Führungselemente zum korrekten Ab- und Abkoppeln der Aufbauten und/oder Sicherungselemente zur Sicherung der Aufbauten und/oder Mittel zur Stromversorgung des Aufbaus und/oder Laufrollen zum schnellen An- und Abkoppeln der Aufbauten. Die Führungselemente können im Besonderen Schienen sein. Die Mittel zur Stromversorgung können ein batteriegespeistes Bordnetz optional gekoppelt mit Solarzellen sein um Versorger, wie Beleuchtung, GPS, Entertainment- und Messsysteme und/oder die Aufbauten mit Kühl oder Heizsystemen zu versorgen. Ebenso kann die Versorgung genutzt werden um die Gesamtreichweite des E-Bikes, insbesondere E-Lastenfahrrad zu verlängern durch Rückspeisung in die Versorgung des Grundfahrrads. Die Sicherungselemente können zum Beispiel einen oder mehrere Fang- und Sicherungshaken, umfassen, die automatisch einrasten.

In einer weiteren Ausführungsvariante kann das modulare Vorderteil eine Transportbox aufnehmen. In einer optionalen Ausführungsvariante weist das modulare Vorderteil eine oder mehrere Heiz- und/oder Kühlvorrichtungen auf. So kann der Inhalt der Transportbox gekühlt oder geheizt werden. Dies ist bspw. von großem Vorteil, wenn die vorliegende Erfindung im Bereich der Lieferantendienste zum Austragen von Lebensmittel und fertigen Speisen verwendet wird.

Ferner umfasst die Transportbox zwei oder mehrere Standfüße, insbesondere vier Standfüße, die beim Ankoppeln automatisch einfahren und bei Abkoppeln automatisch ausfahren. So fahren ein oder mehrere erste Standfüße beim Lösen der Sicherungshaken aus und die Transportbox steht sogleich fest auf dem Boden. Das Lastenrad, insbesondere das E-Lastenrad, mit dem modularen Vorderteil kann unter der Transportbox weggezogen werden, wobei ein oder mehrere zweite Standfüße automatisch ausfahren und die Transportbox unabhängig von dem modularen Vorderteil stehen kann. Der Benutzer muss sich somit auch nicht bücken, um die Transportbox zu be- oder entladen. Das automatische Ausfahren der Standfüße erfolgt über eine Federlagerung der Standfüße.

In einer optionalen Ausführungsform des erfindungsgemäßen Sets umfasst das modulare Vorderteil einen passiven Insassenschutz, insbesondere Gurt und/oder Überrollbügel und/oder Witterungsschutz für den Innenraum und/oder eine Abdeckung, die Schutz bei Unfällen bietet und/oder die Sichtbarkeit des Fahrers auf Insassen des Vorbaus und auf den vor dem Transportsystem liegenden Weg gewährleistet. So kann die Abdeckung aus verstärkten Kunststoffen oder Kunststoffen wie ABS, Thermoplasten oder auch Naturfasern bestehen, die den Anforderungen genügen und in mechanischen und/oder thermischen Umformungsverfahren gefertigt sind. Optional weist die Abdeckung ein oder mehrere Sichtfenster aus splittersicheren "Plexiglas" auf
Weiter kann in der Abdeckung Beleuchtung bzw. Warnleuchten untergebracht sein. Insbesondere kann die Abdeckung flexible Solarzellen umfassen, um die Reichweite des Gesamtfahrzeuges zu verlängern. Optional lässt sich die Abdeckung von vorne und/oder seitlich öffnen. Ferner können in der Abdeckung ebenfalls abschließbare Staufächer für Kleidung, Einkäufe etc. enthalten sein. In einer besonderen Ausführungsvariante weist das modulare Vorderteil eine Verkleidung aus einem glasfaserverstärkten Laminat und/oder einen integrierten Gitterrohrahmen auf, der bei einer Kollision den Hauptteil der Kräfte aufnehmen und ableiten soll. Somit bleiben die Insassen geschützt. Die Sitze sowie die Sicherheitsgurte sind fest mit Rahmen verbunden. Die stabile Bauweise stellt sicher, dass die Insassen bei einem Aufprall nicht aus dem Fahrzeug geschleudert werden. Die abschließbaren Staufächer schützen die Insassen vor herumfliegenden Gegenständen.

Im Folgenden soll das Verfahren zum Umwandeln eines Fahrrads in ein Lastenfahrrad, insbesondere eines E-Bikes in ein E-Lastenfahrrad, mit Hilfe des erfindungsgemäßen Sets beschrieben werden.

Das modulare Transportmittel und der Rahmen des Fahrrads, insbesondere des E-Bikes, werden zueinander gebracht und grob ausgerichtet. Die im modularen Vorderteil und/oder Steuerrohr integrierte Steckachse wird jeweils in die Anschlussvorrichtung eingeführt. Dabei sind Schieflagen und Winkel irrelevant, da sich die Steckachse an den Kugeln zentriert und über die gegengelagerte Steckachse ausrichtet. Durch Ausüben von Druck auf beispielsweise die Steuereinheit wird die Steckachse in die Anschlussvorrichtung gedrückt. Durch die Geometrie der Steckachse werden die Kugeln und der Schieber nach unten gedrückt und die Feder komprimiert. Sobald der Schieber soweit heruntergedrückt wurde, dass die Kugeln in einen Rezess ausweichen und die Steckachse weiter in die Anschlussvorrichtung eindringt, entsteht ein Formschluss zwischen Rezess in der Steckachse und den Kugeln. Das Ausüben von Druck schließt ebenso die elektrischen und hydraulischen Verbindungen.

Für das Abkoppeln des Transportmoduls ist zunächst der Schieber zu betätigen, sodass die Feder zusammengedrückt wird. In einem zweiten Schritt werden die Steckachsen herausgelöst und somit das modulare Transportmittel freigegeben.

Die Geometrie von Innengehäuse und von Schieber ist so ausgeführt, dass die Kugeln auch im gelösten Zustand im Gehäuse verbleiben und nicht verloren gehen können. Um eine einwandfreie Funktionalität zu gewährleisten, sind sowohl hydraulische- als auch stromführende Leitungen in der Anschlussvorrichtung integriert. Die hydraulischen und stromführenden Leitungsverbindungen werden beim Lösen der Anschlussvorrichtung getrennt. Die hydraulische Leitungsverbindung erfolgt über eine verlustfreie Flachkupplung, deren Öffnen an die Trennung des modularen Transportmittels von dem Rahmen gebunden ist. Durch die Formgebung der Steckachse und den vorgegebenen Formschluss sind die Kupplungen beim Schließen des Mechanismus automatisch zueinander ausgerichtet. Durch die Kraftaufwendung beim Schließen der Anschlussvorrichtung, werden jeweils sowohl Strom- als auch Hydraulikleitungen miteinander verbunden.

Nach einem weiteren Aspekt ist eine Anschlussvorrichtung zum Kuppeln von einem Fahrradrahmen mit einem Fahrradvorderteil, wobei die Anschlussvorrichtung eingerichtet ist, um zumindest zwei unterschiedliche Fahrradvorderteile austauschbar zu kuppeln, beschrieben. Die Anschlussvorrichtung ist demnach geeignet, einen Fahrradrahmen und ein modulares Vorderteil, wie ein Transportmittel, mittels einer Steckachse zu koppeln. Die Steckachse kann dabei als integraler Bestandteil des Vorderteils ausgebildet sein oder aber mit dem modularen Vorderteil verbunden sein. Die Anschlussvorrichtung umfasst ein Gehäuse, zwei oder mehrere Kugeln, zumindest zwei Lager, und eine drehbar gelagerte Welle. Das Gehäuse kann einen ersten Anbindungspunkt an das jeweilige Fahrradvorderteil und einen zweiten Anbindungspunkt an den Fahrradrahmen umfassen. Die zwei oder mehreren Kugeln können innerhalb eines Bewegungsspielraums angeordnet sein.

Die Anschlussvorrichtung kann eine Anschlussvorrichtung nach dem ersten Aspekt sein. Die Anschlussvorrichtung ist ausgestaltet, um verschiedene Vorderteile austauschbar mit wenigen Handgriffen mit einem Fahrradrahmen zu kuppeln. Insbesondere ist die Anschlussvorrichtung ausgestaltet, um auftretenden Lasten und Momente für verschiedene ankuppelbare Vorderteile aufzunehmen. Als Vorderteile bzw. modulare Vorderteile werden neben Radvorderteilen von Standardfahrrädern auch Lastenvorderteile verstanden. Die Anschlussvorrichtung ist eingerichtet, Vorderteile, die im Vergleich zu Standardrädervorderteilen hohe Lasten und Momente auf die Anschlussvorrichtung erzeugen, in einem Anbindungspunkt aufzunehmen.

Unter dem Transportmittel kann grundsätzlich eine Vorrichtung verstanden werden, die geeignet ist, einen Gegenstand aufzunehmen und den Gegenstand zu transportieren. Das Transportmittel kann eine Komponente oder ein Bestandteil eines Lastenfahrrades sein, wobei die Komponente oder der Bestandteil des Lastenfahrrades geeignet ist, Lasten zu transportieren. Unter Lasten versteht die vorliegende Beschreibung, dass neben den Lasten durch einen Fahrer des Fahrrads zusätzlich weitere Lasten durch das Transportmittel getragen werden können. Das Transportmittel kann als Lastenfahrradvorderteil ausgestaltet sein, das sich von einem konventionellen Fahrradvorderteil hinsichtlich der Tragfähigkeit und der Abmessungen unterscheidet. Insbesondere kann das Transportmittel in einem an die Anschlussvorrichtung angekuppelten Zustand in Verbindung mit dem Fahrradrahmen zu einem größeren Radstand als bei einem Standardfahrrad führen. Die Abmessungen und insbesondere ein anderer Schwerpunkt des Transportmittels führen in einem an die Anschlussvorrichtung gekuppelten Zustand zu höheren Momenten und Lasten im Bereich der Anschlussvorrichtung als bei einem an die Anschlussvorrichtung angekuppelten Radvorderteil eines Standardfahrrads.

Das Gehäuse der Anschlussvorrichtung kann die Lager, die Welle und die zwei oder mehreren Kugeln umschließen. Das Gehäuse kann als Bestandteil des Rahmens, wie z.B. dem Steuerrohr ausgebildet sein, in den die Anschlussvorrichtung aufgenommen ist. Damit kann erreicht werden, dass die mindestens zwei Lager, die Welle und die zwei oder mehreren Kugeln von externen Einflüssen (z.B. durch Staub und/oder Nässe) geschützt werden.

Die Welle ist eingerichtet die Steckachse aufzunehmen und diese formschlüssig, zur Übertragung von Steuerbewegungen zu verbinden. Damit kann mittels der Welle ermöglicht werden, dass Steuerbewegungen zwischen dem Fahrradrahmen und der Steckachse übertragen/transferiert werden. Im Allgemeinen kann mittels der Welle eine kinematische Koppelung zwischen dem Fahrradrahmen und der Steckachse erzielt werden. Die Steuerbewegungen können Lenkbewegungen eines am Fahrradrahmen verbundenen Lenkers sein. Die Steuerbewegungen können eine rotatorische Bewegung sein. Die Übertragung von Steuerbewegungen mittels der Welle kann eine Übertragung nur einer rotatorischen Bewegung sein.

Die Welle umfasst eine erste Auflagefläche für die Steckachse zum Transferieren einer Last zwischen dem Fahrradvorderteil (z.B. dem Transportmittel) über die Lager und das Gehäuse in den Fahrradrahmen. Die Last kann auf das Fahrradvorderteil und/oder den Fahrradrahmen wirken. Die Last kann eine Belastung sein. Die Last kann eine Kraft und/oder ein Moment umfassen. Die Last kann eine mechanische Last sein. Die Last kann eine statische und/oder dynamische Last umfassen. Eine statische Last kann eine Gewichtslast umfassen. Die dynamische Last kann eine Trägheitslast sein und/oder eine Zwangslast umfassen. Mit dem Transferieren der Last mittels der Welle kann, insbesondere in einem gekuppelten Zustand, eine Tragfähigkeit und/oder eine Gebrauchstauglichkeit zwischen dem Vorderteil und dem Fahrradrahmen hergestellt werden. Unter der Tragfähigkeit kann verstanden werden, dass die Welle und/oder die Anschlussvorrichtung die Last unbeschadet aufnehmen und transferieren kann. Darunter kann verstanden werden, dass die Welle und/oder die Anschlussvorrichtung derart bemessen oder konstruiert ist, dass die Welle und/oder die Anschlussvorrichtung die Last aufnehmen und transferieren kann. Unter der Gebrauchstauglichkeit kann verstanden werden, dass Verformungen beschränkt sind. Darunter kann verstanden werden, dass die Welle und/oder die Anschlussvorrichtung derart bemessen oder konstruiert ist, dass die Welle und/oder die Anschlussvorrichtung unter der Last keine plastischen oder bleibenden Verformungen erfährt, die wiederum und insbesondere eine Funktionsweise der Anschlussvorrichtung zumindest teilweise einschränken könnte. Im Allgemeinen kann die Welle die kinematische Koppelung und eine Lastkoppelung mit der Steckachse herstellen. Die Lastkoppelung umfasst das transferieren der Last zwischen dem Fahrradvorderteil (z.B. das Transportmittel) über die Lager und das Gehäuse in den Fahrradrahmen.

Die Lager können geeignet sein die Welle drehbar mit dem Gehäuse zu verbinden und Lasten zwischen der Welle und dem Gehäuse zu transformieren. Die Lager können eine relative Drehbarkeit zwischen der Welle und dem Gehäuse herstellen. Die Lager können Rolllager oder Rollenlager sein.

Die zwei oder mehreren Kugeln umfassen eine zweite Auflagefläche für die Steckachse, wobei die zweite Auflagefläche geeignet ist einen Verschluss mit der Steckachse herzustellen und/oder die Steckachse zu einem Lösen freizugeben. Unter dem Verschluss kann verstanden werden, dass mittels der zweiten Auflagefläche die Steckachse und die Anschlussvorrichtung zumindest temporär verbunden werden kann. Die zweite Auflagefläche ist eingerichtet, durch eine Reibung den Verschluss mit der Steckachse herzustellen. Im Allgemeinen kann die zweite Auflagefläche eine kinematische Koppelung zwischen der Anschlussvorrichtung und der Steckachse zumindest temporär herstellen, wobei die kinematische Koppelung eine relative Bewegung zwischen der Anschlussvorrichtung und der Steckachse zumindest temporär einschränken kann um den Verschluss mit der Steckachse herzustellen und/oder die Steckachse zu dem Lösen freizugeben. Die kinematische Koppelung kann durch Reibung zwischen der zweiten Auflagefläche und der Steckachse hergestellt werden. Die relative Bewegung kann eine relative translatorische Bewegung sein. Die relative Bewegung kann ein Einführen der Steckachse in die Anschlussvorrichtung umfassen. Die zwei oder mehreren Kugeln, insbesondere die zweite Auflagefläche, können ferner die Last zwischen dem Fahrradvorderteil (z.B. dem Transportmittel) und dem Gehäuse in den Fahrradrahmen transferieren. Mit anderen Worten ausgedrückt sind die zwei oder mehreren Kugeln geeignet, die kinematische Koppelung und eine Lastkoppelung zwischen dem Fahrradvorderteil und dem Fahrradrahmen herzustellen. Die Lastkoppelung ist geeignet eine Last zwischen dem Fahrradvorderteil und dem Gehäuse in den Fahrradrahmen zu transportieren.

Das Gehäuse kann ein äußeres Gehäuse und ein inneres Gehäuse umfassen, wobei das äußere Gehäuse jeweils als Anbindungspunkt an das Fahrradvorderteil und den Fahrradrahmen dient, wobei das innere Gehäuse als eine innere Auflagefläche der Kugeln eingerichtet ist und einen Bewegungsspielraum aufweist bzw. diesen eingrenzt, um einen räumlich vorgegebenen Freigang der Kugeln zu ermöglichen, wobei die Lager die Drehbarkeit der Welle ermöglichen, und wobei die Drehbarkeit der Welle eine relative Drehbarkeit bezogen auf das äußere Gehäuse ist. Unter der relativen Drehbarkeit der Welle kann ein beispielhafter Fall subsumiert werden, worin die Steuerbewegungen eine rotatorische Bewegung ist und die Drehung der Welle im Wesentlichen die rotatorische Bewegung beschreibt und die Drehung der Welle auf die Steckachse überträgt. Die Steuerbewegungen können somit die Drehung der Welle veranlassen und die Welle wiederum überträgt die Drehung auf die Steckachse.

Das äußere Gehäuse kann ferner einen Deckel umfassen; wobei der Deckel eine Aufnahmeöffnung umfassen kann, wobei die Aufnahmeöffnung geeignet zur Einführung der Steckachse sein kann. Die zwei oder mehreren Kugeln, insbesondere drei oder mehreren Kugeln, können gleichmäßig um die Aufnahmeöffnung verortet sein, und die um die Aufnahmeöffnung verorteten zwei oder mehreren Kugeln können geeignet sein, eine Zentrierung der Steckachse zu ermöglichen, wenn die Steckachse in das Gehäuse eingeführt wird. Mit drei oder mehreren Kugeln wird, gegenüber den zwei oder mehreren Kugeln, eine vorteilhafte Wirkung in einem besseren oder stabileren oder homogeneren Verschluss mit der Steckachse hergestellt.

Die Welle kann als Hohlwelle ausgebildet sein, wobei eine elektrische Verbindung und/oder eine hydraulische Verbindung in der Hohlwelle integriert sein kann. Die elektrische Verbindung kann geeignet sein, einen Stromanschluss in der Steckachse über eine Steckverbindung zu verbinden und/oder zu lösen. Die hydraulische Verbindung kann geeignet sein einen Hydraulikanschluss in der Steckachse über eine Flachkupplung zu verbinden. Das elektrische und/oder das hydraulische Verbinden oder Lösen kann mittels des Herstellens und/oder Lösens des Verschlusses mit der Steckachse erfolgen. Mit dem Kuppeln der Anschlussvorrichtung und der Steckachse kann somit gleichzeitig die Funktionsweise der Anschlussvorrichtung sicher- bzw. hergestellt werden. Die Funktionsweise kann folgendes umfassen: das Übertragen der Steuerbewegungen und das Transferieren der Last zwischen dem Fahrradvorderteil über die Lager und das Gehäuse in den Fahrradrahmen und das Herstellen des Verschlusses mit der Steckachse und das Herstellen der elektrischen und/oder hydraulischen Verbindung.

Die Anschlussvorrichtung kann für eine Übertragung der Last vertikal bis zu 10.000 N, d.h., ca. 1t bzw. und horizontal bis 4.000 N, d.h., ca. 400 kg ausgelegt sein.

Die drehbar gelagerte Welle kann einen oberen Teil umfassen, der geeignet ist Fahrradvorbauten und/oder einen Fahrradlenker anzubringen.

Die Anschlussvorrichtung kann einen Ring umfassen. Der Ring kann sich innerhalb des Gehäuses im Bereich der Aufnahmeöffnung der Steckachse befinden. Die zwei oder mehreren Kugeln können jeweils eine Ausnehmung umfassen, wobei jede Ausnehmung der zwei oder mehreren Kugeln geeignet sein kann einen Abschnitt des Ringes aufzunehmen. Der Ring kann im Wesentlichen um die Aufnahmeöffnung verortet sein. Die Bewegung der zwei oder mehreren Kugeln mit der Aufnahme des Abschnittes des Ringes kann eingeschränkt sein. Die eingeschränkte Bewegung kann eine eingeschränkte rotatorische Bewegung sein. Mit der Aufnahme des Abschnittes des Ringes in die Ausnehmung kann für die zwei oder mehreren Kugeln jeweils nur eine translatorische Bewegung in einer Ebene ermöglicht werden. Die Ebene der translatorischen Bewegung kann beschränkt sein. Die Ebene kann im Wesentlichen parallel zu der Aufnahmeöffnung orientiert sein. Mit der Aufnahme des Abschnittes des Ringes in der Ausnehmung können die zwei oder mehreren Kugeln jeweils nur einen Bewegungsfreiheitsgrad besitzen. Der Bewegungsfreiheitsgrad kann ein translatorischer Bewegungsfreiheitsgrad sein, mit einer Richtung im Wesentlichen nach innen in das äußere Gehäuse orientiert. Aufgrund des Ringes können die zwei oder mehreren Kugeln nicht nach innen und durch die Aufnahmeöffnung fallen.

Die Anschlussvorrichtung kann ferner einen Griff oder eine Manschette und einen Schieber und eine oder mehrere Federn umfassen. Das äußere Gehäuse kann den Schieber und die eine oder mehreren Federn umschließen. Der Griff kann von dem Deckel beabstandet sein. Die Manschette kann von dem äußeren Gehäuse beabstandet sein. Der Schieber kann die einen oder mehreren Federn führen und eine Auflagefläche für die zwei oder mehreren Kugeln umfassen. Die Auflagefläche kann der zweiten Auflagefläche gegenüberliegen. Die Auflagefläche kann im Wesentlichen keilförmig ausgebildet sein. Der Schieber kann mittels einer Bewegung des Griffs oder einer Bewegung der Manschette einen Freiraum schaffen, mittels dem die zwei oder mehreren Kugeln bewegbar sein können um den Verschluss mit der Steckachse herzustellen und/oder die Steckachse zu dem Lösen freizugeben. Die Bewegung des Griffs kann ein Betätigen des Griffs sein und die Bewegung der Manschette kann eine rotatorische Bewegung umfassen. Die Manschette kann ferner einen Stift oder Pin umfassen, wobei der Stift und der Schieber und ferner der Stift und die Manschette in Kontakt stehen können. Der Stift kann die rotatorische Bewegung der Manschette und eine Bewegung des Schiebers zumindest teilweise koppeln. Die Manschette kann ferner eine erste und eine zweite Endposition umfassen. Die erste und die zweite Endposition kann die rotatorische Bewegung der Manschette einschränken. Die erste Endposition kann geeignet sein den Verschluss mit der Steckachse herzustellen und die zweite Endposition kann geeignet sein die Steckachse zu dem Lösen freizugeben. Ein Erreichen der ersten und/oder der zweiten Endposition kann mittels der rotatorischen Bewegung der Manschette erfolgen. Die erste und der zweite Endposition kann beabstandet sein, wobei die Beabstandung geeignet sein kann eine Stauchung oder eine Streckung der einen oder mehreren Federn zu veranlassen. Die Manschette kann eine Führungsbahn umfassen, die geeignet ist die Bewegung der Manschette und die Bewegung des Stifts zumindest teilweise zu koppeln. Der Stift kann entlang der Führungsbahn bewegt werden. Der Stift kann zwischen der ersten oder zweiten Endposition und entlang der Führungsbahn oder in einer Richtung, die durch die Führungsbahn vorgegeben ist, bewegt werden. Durch die Bewegung der Manschette, insbesondere eine rotatorische Bewegung der Manschette, können Kräfte, insbesondere Zwangskräfte, auf den Stift hervorgerufen werden, wobei die Kräfte die Bewegung des Stifts entlang der Führungsbahn beschränkt. Diese Kräfte können die Bewegung des Schiebers veranlassen.

Die Anschlussvorrichtung kann ferner eine Sicherungsmembran umfassen, die ausgestaltet ist, ein Verlassen der zwei oder mehreren Kugeln aus dem Freiraum zu verhindern. Das äußere Gehäuse kann ferner die Sicherungsmembran und das innere Gehäuse umschließen. Die Sicherungsmembran kann den Freiraum teilweise abgrenzen. Die Sicherungsmembran kann an dem Deckel und an dem inneren Gehäuse angebracht sein. Die Sicherungsmembran kann geeignet sein, die zweite Auflagefläche mittels Sicherungsmembran herzustellen. Die Sicherungsmembran kann ein Netz umfassen, wobei das Netz mindestens ein Loch umfassen kann, wobei das Loch derart orientiert und/oder geeignet sein kann, dass das Loch die zweite Auflagefläche nicht durch das Netz beeinflusst ist. Die Sicherungsmembran kann ein Netz umfassen, wobei das Netz mindestens ein Loch umfassen kann, wobei das Loch derart orientiert und/oder geeignet sein kann, dass das Netz von der zweiten Auflagefläche mittels des Lochs beabstandet ist. Die Anschlussvorrichtung kann im Wesentlichen zylinderförmig ausgebildet sein. Die Anschlussvorrichtung kann in manchen Ausführungsformen eine Längsausdehnung von beispielsweise 10- 30 cm umfassen. Die Längsausdehnung kann so gewählt sein, um das zu transferierende Moment möglichst gut aufnehmen zu können.

Nach einem weiteren Aspekt umfasst die Erfindung ein System zum Kuppeln von einem Fahrradrahmen mit einem Fahrradvorderteil. Das System ist somit geeignet, einen Fahrradrahmen und ein modulares Vorderteil, wie beispielsweise ein modulares Transportmittel zu koppeln. Das System weist eine Anschlussvorrichtung und eine Steckachse auf. Die Anschlussvorrichtung kann eingerichtet sein, die Steckachse aufzunehmen und damit das modulare Transportmittel mit der Anschlussvorrichtung zu koppeln. Die Anschlussvorrichtung kann eine Öffnung aufweisen, um die Steckachse aufzunehmen, um damit das Fahrradvorderteil mit der Anschlussvorrichtung zu koppeln. Die Anschlussvorrichtung kann eingerichtet sein, um mit dem Fahrradrahmen gekoppelt zu werden. Die Anschlussvorrichtung kann einen Anbindungspunkt aufweisen, um mit dem dem Fahrradrahmen gekoppelt zu werden. Die Anschlussvorrichtung kann eingerichtet sein, die durch das gekoppelte modulare Vorderteil (z.B. ein Transportmittel) über die Steckachse auf die Anschlussvorrichtung wirkende Last (d.h. die Kräfte und/oder Momente) aufzunehmen. Das (modulare) Vorderteil kann in nur einem Anbindungspunkt an die Anschlussvorrichtung und den daran gekoppelten Fahrradrahmen gekoppelt sein. Somit kann der Fahrradrahmen und das Transportmittel in nur einem Anbindungspunkt und mittels der Anschlussvorrichtung gekoppelt werden. Die die Steckachse kann ausgestaltet sein, um mit ihrem nicht aufgenommenen Ende an dem Fahrradvorderteil montiert bzw. demontiert zu werden, um ein austauschbares Anbringen von zumindest zwei Fahrradvorderteilen zu ermöglichen und/oder wenn die Steckachse integral mit dem Fahrradvorderteil verbaut ist, die Anschlussvorrichtung ausgestaltet ist, zumindest zwei unterschiedliche Fahrradvorderteile über deren jeweilige Steckachse austauschbar aufzunehmen. Damit ist erfindungsgemäß eine einzige Anschlussvorrichtung zwischen Rahmen und modularem Vorderteil ausreichend, um das modulare Vorderteil und den Fahrradrahmen in nur einem Anbindungspunkt zu koppeln und die wirkenden Lasten aufzunehmen. Insbesondere ist die Anschlussvorrichtung ausgestaltet, um die gegenüber eines üblichen Fahradvorderteils größeren Kräfte eines Lastenvorderteils bzw. Transportmittels in nur einem Anbindungspunkt aufzunehmen. Die Steckachse kann eingerichtet sein, um an dem Fahrradrahmen oder an dem Transportmittel montiert und/oder demontiert zu werden. Die Anschlussvorrichtung kann eine Anschlussvorrichtung nach dem ersten Aspekt sein. Die Steckachse kann im Wesentlichen zylinderförmig sein. Die Steckachse kann ein Ende, einen ersten und zweiten Abschnitt umfassen. Das Ende der Steckachse kann ausgelegt sein, um in die Anschlussvorrichtung aufgenommen zu werden. Der erste Abschnitt kann an das Ende angrenzen. Der zweite Abschnitt kann an den ersten Abschnitt angrenzen. Der erste Abschnitt kann einen kleineren Durchmesser als der zweite Abschnitt umfassen. Der erste Abschnitt kann ausgelegt sein, Lasten zu übertragen. Der zweite Abschnitt kann einen Rezess umfassen. Der Rezess kann geeignet sein den Verschluss mit der Anschlussvorrichtung herzustellen und/oder die Anschlussvorrichtung zu dem Lösen freizugeben.

Nach einem weiteren Aspekt umfasst die Erfindung ein Wechselsystem zum Umwandeln eines Standardfahrrads in ein Lastenfahrrad und umgekehrt. Das Wechselsystem ist somit geeignet, um ein konventionelles Fahrrad in ein Lastfahrrad und/oder ein Lastfahrrad in ein konventionelles Fahrrad umzuwandeln. Das Wechselsystem besteht aus einen Fahrradrahmen mit mindestens einem Hinterrad, einer Anschlussvorrichtung, zumindest einer Steckachse und einem ersten Fahrradvorderteil und einem zweiten Fahrradvorderteil. Die Fahrradvorderteile sind mit der Anschlussvorrichtung kuppelbar. Unter dem Wechselsystem kann eine umwandelbare Koppelung von zwei verschiedenen Typen von Fahrrädern basierend auf einem gemeinsamen Fahrradrahmen verstanden werden, beispielsweise eine Umwandlung von einem Lastenfahrrad in ein konventionelles Fahrrad und umgekehrt. Gemäß einer Ausführungsform der Erfindung unterscheidet das Wechselsystem zwischen den beiden Typen Lastenfahrrad und konventionelles Fahrrad bzw. Standardfahrrad. Das Lastenfahrrad weist ein Transportmittel als Fahrradvorderteil auf, das ausgelegt ist, größere Lasten im Vergleich zu dem Fahrradvorderteil des konventionellen Fahrrads zu transportieren. Insbesondere weist ein Lastenfahrrad im Gegensatz zu einem konventionellen Fahrrad ein Lastenvorderteil auf, das Lasten bis zu mehreren Hundert Kilogramm tragen kann. Die Erfindung unterscheidet zwischen Lastenfahrrad und Standardfahrrad auch hinsichtlich ihrer konzeptionell verschiedenen Abmessungen, die sich unter anderem in unterschiedlichen Radständen oder unterschiedlichen Abständen zwischen der Anschlussvorrichtung und dem Schwerpunkt des jeweiligen modularen Vorderteils (d.h., Lastenvorderteil/Transportmittel vs. konventionelles Radvorderteil) niederschlagen.

Durch das erfindungsgemäße Wechselsystem ist es möglich, den Rahmen eines Fahrrads für unterschiedliche Anwendungszwecke bereitzustellen. So kann beispielsweise durch die Anbringung des erfindungsgemäßen Anschlusselements an dem Rahmen ein Verbindungselement geschaffen werden, um ein Lastenfahrradvorderteil und ein konventionelles Fahrradvorderteil daran austauschbar anzuschließen. Insbesondere wird durch die erfindungsgemäße Anschlussvorrichtung ein schnelles Wechseln von modularen Transportmitteln bzw. modularen Vorderteilen ermöglicht, da eine Verbindung mit dem Rahmen in nur einem Anbindungspunkt erfolgt und diese Anbindung zudem in einer einfachen Steckverbindung erfolgt.

Die Anschlussvorrichtung kann in einem Steuerrohr des Fahrradrahmens integriert sein oder die Anschlussvorrichtung kann ein Steuerrohr des Fahrradrahmens sein. Die Anschlussvorrichtung kann über die zumindest eine Steckachse jeweils mit dem ersten und zweiten Fahrradvorderteil austauschbar koppelbar sein. Die Anschlussvorrichtung kann geeignet sein, den Fahrradrahmen und das jeweilige Fahrradvorderteil in nur einem Anbindungspunkt austauschbar zu kuppeln. Das erste Fahrradvorderteil kann ein Transportmittel sein, wobei das System bei gekoppeltem Transportmittel ein Lastenfahrrad darstellen kann. Das zweite Fahrradvorderteil kann ein Radvorderteil sein, wobei das System bei gekoppeltem Radvorderteil ein konventionelles Fahrrad darstellen kann. Bevorzugt ist das Wechselsystem mit der erfindungsgemäßen Anschlussvorrichtung derart ausgestaltet, dass zumindest zwei verschiedene Fahrradvorderteile austauschbar mit der Anschlussvorrichtung verbunden werden können. Der erste Fahrradvorderteil und der zweite Fahrradvorderteil können sich darin unterscheiden, dass diese wenigstens zwei verschiedene Beabstandungen aufweisen: Der Abstand zwischen der Anschlussvorrichtung und dem Schwerpunkt des Transportmittels des ersten Fahrradvorderteils ist größer als der Abstand zwischen der Anschlussvorrichtung und dem Schwerpunkt des Radvorderteils (des zweiten Fahrradvorderteils).

Zudem ist in einer bevorzugten Ausführungsform der Radstand zwischen einem jeden Rad des mindestens einen Rades am Transportmittel des ersten Fahrradvorderteils und dem Hinterrad größer als der Radstand zwischen dem Rad des Radvorderteils und dem Hinterrad. Die Anschlussvorrichtung des Wechselsystems kann eine Anschlussvorrichtung aus dem ersten Aspekt sein.

### Ausführungsbeispiele

Anhand der Figuren wird die Erfindung in ihren Details im Wesentlichen erklärt.
Fig. 1: Steuerrohr mit integrierter Anschlussvorrichtung (links verbunden, rechts entkoppelt)
Fig. 2: Anschlussvorrichtung Detail (verriegelt)
Fig. 3: Anschlussvorrichtung Detail (entriegelt)
Fig. 4: Verriegelungsflächen
Fig. 5: Anschlussvorrichtung komplett
Fig. 6: Hydraulik- und Stromverbindung
Fig. 7: Modulares Vorderteil in Transportkonfiguration
Fig. 8: Modulares Vorderteil mit Transportbox
Fig. 9 Modulares Vorderteil in Personenkonfiguration
Fig. 10: Einführung Steckachse in Anschlussvorrichtung
Fig. 11A: Ein Sicherungskonzept für die Anschlussvorrichtung
Fig. 11B: Kugel des Sicherungskonzeptes für die Anschlussvorrichtung
Fig. 12: Ein weiteres Sicherungskonzept für die Anschlussvorrichtung
Fig. 13A: Anschlussvorrichtung mit Manschette (schematisch)
Fig. 13B: Anschlussvorrichtung mit Manschette
Fig. 14A: Fahrrad mit Transportmittel
Fig. 14B: Fahrrad mit Transportmittel (schematische Draufsicht von oben)
Fig. 15A: Fahrrad mit Radvorderteil eines Standardfahrrads
Fig. 15B: Fahrrad mit Radvorderteil eines Standardfahrrads (schematische Draufsicht von oben)
Fig. 16: Anschlussvorrichtung mit schematischen Kräften und Momenten
Fig. 17A: Fahrrad mit Radvorderteil eines Standardfahrrads mit schematischen Kräften bzw. Momenten
Fig. 17B: Fahrrad mit Transportmittel (mit schematischen Kräften bzw. Momenten)
Fig. 18: Lastenverläufe Lastenfahrrad vs. Standardfahrrad

In der folgenden Beschreibung der Ausführungsbeispiele können gleiche oder ähnliche Komponenten gleiche Bezugszeichen haben.

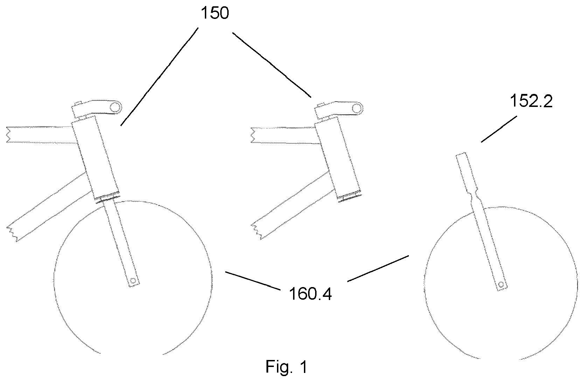

Fig. 1 zeigt eine Anschlussvorrichtung 150, die in einem Steuerrohr eines Fahrradrahmens 156 integriert ist für zwei Zustände. In einem ersten Zustand koppelt die Anschlussvorrichtung 150 den Fahrradrahmen 156 und ein Radvorderteil 160.4 eines Standardfahrrads mittels einer Steckachse 152.2, die am Radvorderteil 160.4 verortet ist.

Dabei handelt es sich um einen verriegelten, verbundenen oder gekoppelten Zustand, bei dem sich die Steckachse 152.2 in der Anschlussvorrichtung 150 in einem verriegelten Zustand befindet. Weiterhin zeigt Fig. 1 einen zweiten Zustand, bei dem das Radvorderteil 160.4 mit seiner Steckachse von der Anschlussvorrichtung 150 entkoppelt ist. Es handelt sich hierbei um einen gelösten oder nicht verbundenen Zustand. Die Anschlussvorrichtung 150 ist geeignet zwischen diesen beiden Zuständen, ohne einen Einsatz oder eine Verwendung von Werkzeugen und/oder Hilfsmittel zu wechseln.

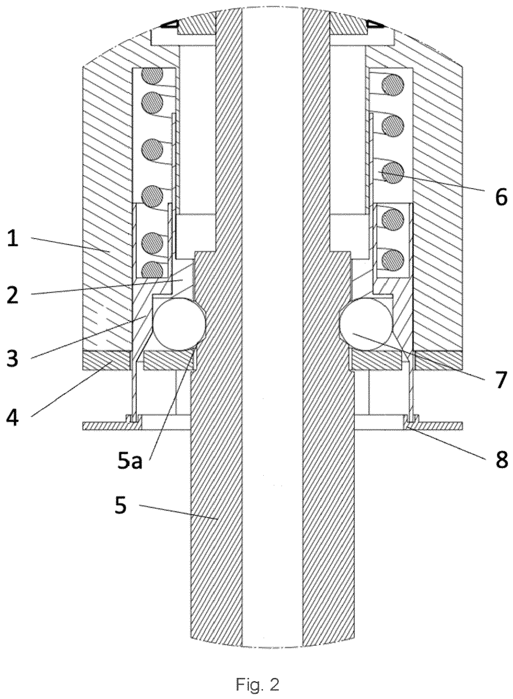

Fig. 2 zeigt die verriegelte Anschlussvorrichtung mit dem äußeren Gehäuse 1, dem inneren Gehäuse 2, dem Schieber 3, dem Deckel 4, der Steckachse 5, der Feder 6, den Kugeln 7 und dem Griff 8. Das erste äußere Gehäuse 1 umschließt das Gesamtsystem und schützt es vor äußeren Einflüssen. Es bietet Anbindungspunkte an das modulare Transportmittel und den Rahmen des Fahrrads, insbesondere des E-Bikes, und kann mit dem Deckel 4 verschlossen werden. Das zweite innere Gehäuse 2 stellt die innere Auflagefläche der Kugeln 7 dar. Es wird durch das erste äußere Gehäuse 1 geführt, wobei das zweite innere Gehäuse 2 einen Bewegungsspielraum aufweist, um einen Freigang für die Kugeln 7 zu ermöglichen. Der innere Teil der Auflagefläche des inneren Gehäuses 2 zeichnet sich durch eine Geometrie aus, die ein Herausfallen der Kugeln 7 im gelösten Zustand verhindert, in dem der Spalt zwischen Gehäuse 2 und Deckel 4 kleiner ist als der Durchmesser der Kugeln 7. Der Schieber 3 erfüllt drei Funktionen: Er führt die Feder 6 und stellt die äußere Auflagefläche der Kugeln 7. Außerdem ist die Geometrie so gewählt, dass beim Betätigen des Schiebers 3 über den Griff 8 ein Freiraum geschaffen wird, über den die Kugeln 7 sich nach außen bewegen können und die Steckachse 5 zum Lösen freigeben. Der Deckel 4 schließt das Gesamtsystem mit dem äußeren Gehäuse 1 ab und bietet durch seine Formgebung als Gegenstück zum zweiten inneren Gehäuse 2 einen Schutz vor dem Herausfallen der Kugeln 7. Die Steckachse 5 ist das Anbindungselement an das modulare Vorderteil des modularen Transportmittels. Durch einen Formschluss werden die Steuerbewegungen übertragen. Außerdem bietet die Steckachse 5 einen Rezess 5a, um eine Auflagerfläche für die Kugeln 7 zu bieten, damit das System schließen kann.

Der Verschluss der Anschlussvorrichtung erfolgt über die federgelagerte Kugeln 7, die in die Steckachse 5 einrasten.

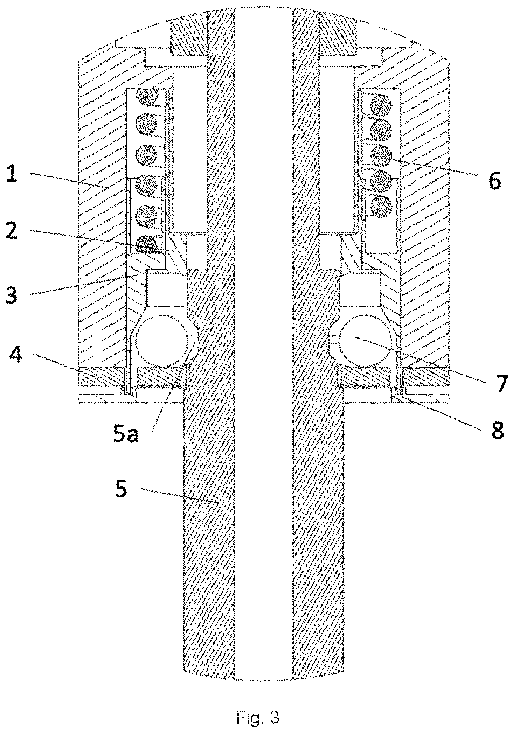

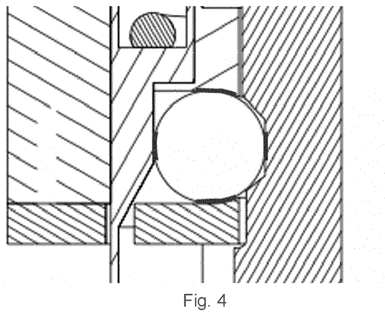

Der Verschluss der Anschlussvorrichtung erfolgt somit im Genauen, wie in Fig. 4 dargestellt, über den Schluss zwischen Steckachse 5, innerem Gehäuse 2, Schieber 3 und Deckel 4, welcher durch die Kugeln 7 hergestellt wird. Das System ist permanent vorgespannt, so dass ein versehentliches Lösen nicht möglich ist. Bei einem Entriegeln der Anschlussvorrichtung, wie in Fig. 3 dargestellt, kann die Feder zusammengedrückt werden, was den Druck vom inneren Gehäuse 2 und den Kugeln 7 nimmt, so dass diese sich von der Steckachse 5 lösen und nach außen in den Rezess 5a des Schiebers 3 ausweichen womit der Verschluss geöffnet werden kann.

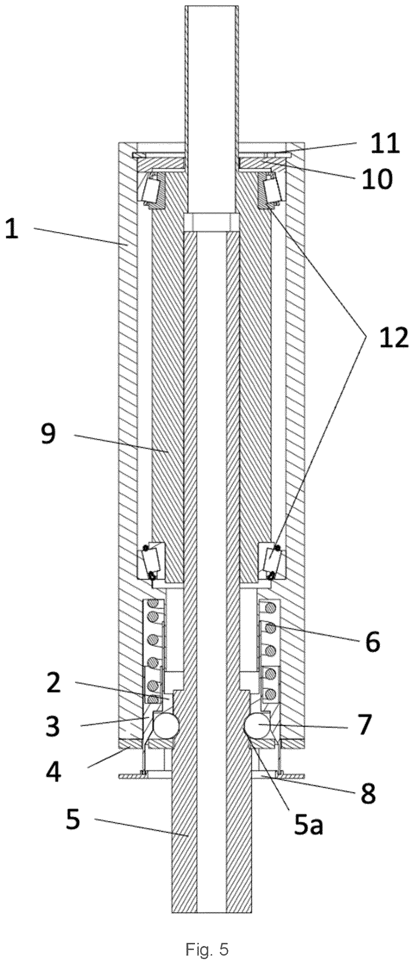

Fig. 5 zeigt weitere Elemente der Anschlussvorrichtung mit der Welle 9, dem oberen Deckel 10, eine Ringsicherung 11, und Lagern 12. Die Welle 9 ist eine Hohlwelle, die die Steckachse 5 aufnimmt und über einen Formschluss die Steuerbewegungen überträgt. Die Auflagefläche zwischen Welle 9 und Steckachse 5 transferiert alle Lasten vom modularen Vorderteil des modularen Transportmittels über die Lager 12 in das äußere Gehäuse 1 in den Rahmen des Fahrrads, insbesondere E-Bikes. Der obere Teil der Welle 9 weist einen Durchmesser auf, der es ermöglicht verschiedene Vorbauten und entsprechende Lenker anzubringen. Der Deckel 10 schließt das Gehäuse 1 nach oben ab und spannt die Lager 12 vor. Eine Sicherung des Deckels erfolgt über die Ringsicherung 11, welches insbesondere ein Sprengring ist. Die Lager 12 ermöglichen eine rotatorische Bewegung der Welle 9 und der formschlüssig verbundenen Steckachse 5, was eine Lenkbewegung ermöglicht. Die Kugeln 7, die zur Sicherung genutzt werden, unterstützen diese Rotation. Außerdem transferieren die Lager 12 alle translatorischen Kräfte vom modularen Vorderteil über Steckachse 5 und Welle 9 in das äußere Gehäuse 1.

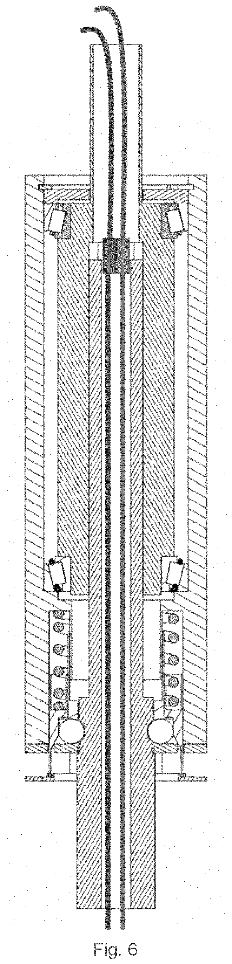

Fig. 6 zeigt die Integration von Strom- und Hydraulikleitung. Steckachse 5 und Welle 9 sind als Hohlwellen ausgeführt, was es ermöglicht eine Hydraulikleitung und Stromleitung zu integrieren. In verriegeltem Zustand wird die Stromleitung über eine Steckverbindung und die Hydraulikleitung über eine verlustfreie Flachkupplung verbunden. Die Leitungen können alternativ auch außerhalb von Gehäuse 1 verlegt, befestigt und gekuppelt werden.

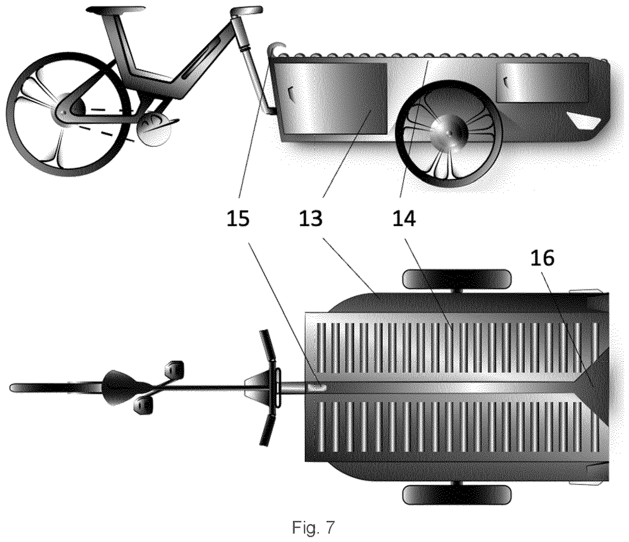

Fig. 7 zeigt eine optionale Ausführungsform des erfindungsgemäßen Sets bei der das modulare Vorderteil 13 des modularen Transportmittels Führungselemente 16 zum korrekten Positionieren der Aufbauten umfasst sowie Sicherungselemente 15 zur strukturellen Integration der Aufbauten in das modulare Vorderteil, um versehentlichen Lösen der Aufbauten zu vermeiden. Weiter umfasst das modulare Vorderteil in dieser Ausführungsform Laufrollen 14 zum schnellen An- und Abkoppeln der Aufbauten.

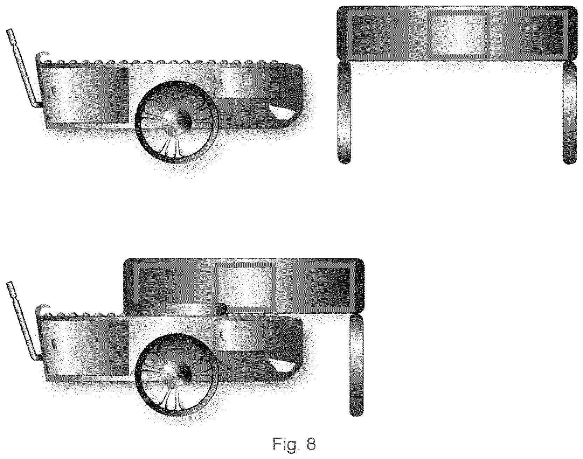

Fig. 8 zeigt eine weitere Ausführungsvariante, bei der das modulare Vorderteil eine Transportbox aufnehmen kann.

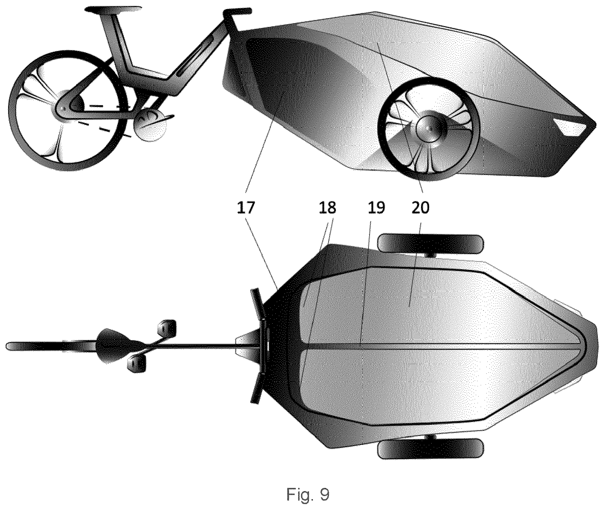

Fig. 9 zeigt einer optionale Ausführungsform des erfindungsgemäßen Sets, bei der der modulare Vorderteil einen passiven Insassenschutz, insbesondere einen oder mehrere Gurte 18 und/oder Überrollbügel 19 und/oder Witterungsschutz 20 für den Innenraum und/oder eine Abdeckung, die Schutz bei Unfällen bietet und/oder die Sichtbarkeit des Fahrers auf Insassen des modularen Vorderteils und auf den vor dem Transportsystem liegenden Weg gewährleistet.

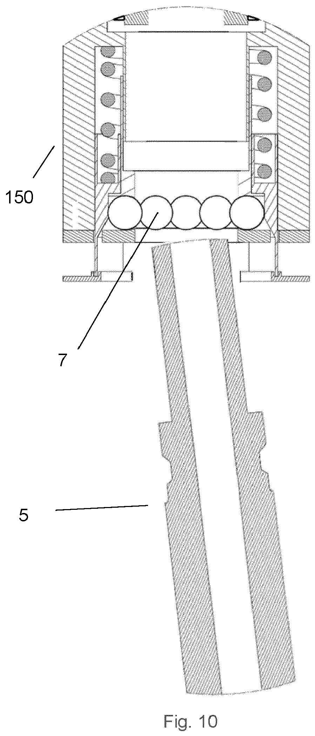

Fig. 10 zeigt eine Anschlussvorrichtung 150 und eine Steckachse 5. Die Anschlussvorrichtung 150 kann eine zuvor genannte Anschlussvorrichtung sein. Die Steckachse 5 kann eine zuvor genannte Steckachse sein. In dieser Ausführungsform wie in Fig. 10 gezeigt, umfasst die Anschlussvorrichtung 150 insbesondere mehrere Kugeln 7. Die mehreren Kugeln 7 sind gleichmäßig um die Aufnahmeöffnung verortet und sind geeignet eine Zentrierung der Steckachse 5 zu ermöglichen. In der dargestellten Situation ist die Steckachse 5 zur Anschlussvorrichtung 150 schräg bzw. nicht gleich ausgerichtet angeordnet. Diese Schrägheit oder Exzentrizität der Steckachse 5 gegenüber der Anschlussvorrichtung 150 wird beim Einführen der Steckachse 5 in die Anschlussvorrichtung 150 oder vice versa mittels der mehreren Kugeln 7 korrigiert bzw. kompensiert, sodass die Steckachse 5 und/oder die Anschlussvorrichtung 150 zumindest beim Herstellen des Verschlusses in eine zentrierte Ausrichtung gebracht wird. Die zentrierte Ausrichtung ist beispielsweise in den Figuren 2 bis 6 dargestellt.

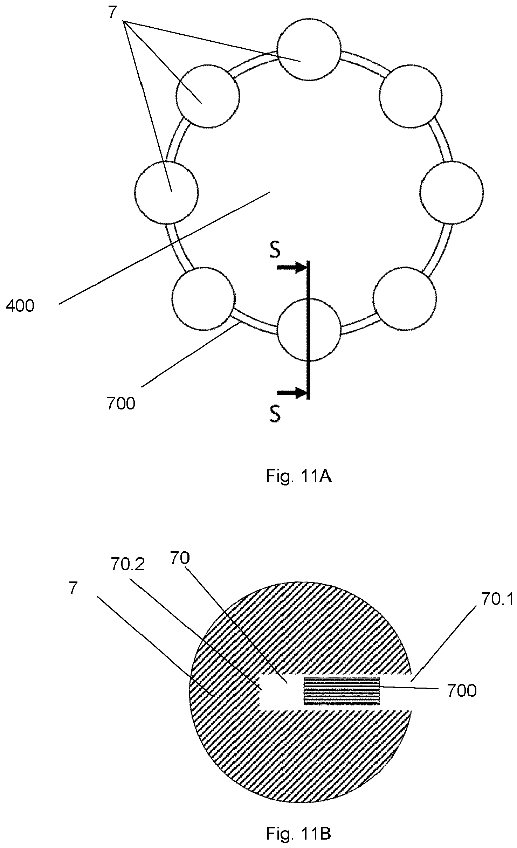

Fig. 11A und 11B zeigen eine Ausführungsform der zwei oder mehreren Kugeln 7 innerhalb der Anschlussvorrichtung 150. Die Ausführungsform zeigt ferner einen im wesentlich zylinderförmigen Ring 700, der als Sicherungskonzept gegen das Herausfallen der Kugeln aus der Anschlussvorrichtung dient. Fig. 11B zeigt einen Schnitt S, der im Wesentlichen durch eine der zwei oder mehreren Kugeln 7 und des Ringes 700 verläuft.

Die Schnittführung des Schnittes gezeigt in Fig. 11B ist in Fig. 11A symbolisch dargestellt.

Die zwei oder mehreren Kugeln 7 sind gleichmäßig um eine Aufnahmeöffnung der Anschlussvorrichtung verortet. In dieser Ausführungsvariante sind die zwei oder mehreren Kugeln 7 im Wesentlichen kreisförmig angeordnet. Die kreisförmige Anordnung der zwei oder mehreren Kugeln 7 ist nur beispielhaft. Der Ring 700 ist im Wesentlichen um die Aufnahmeöffnung der Anschlussvorrichtung 150 verortet. In dieser Ausführungsvariante ist der Ring 700 zylinderförmig ausgestaltet. Die zwei oder mehreren Kugeln umfassen ferner jeweils eine Ausnehmung 70. Die Ausnehmung 70 umfasst ein abgeschlossenes Ende 70.2 und ein gegenüberliegendes freies Ende 70.1.

Die Ausnehmung 70 ist dimensioniert, um einen Abschnitt des Ringes 700 darin aufzunehmen. Die Aufnahme des Ringes 700 in die Ausnehmung 70 erfolgt über das freie Ende 70.1.

Die Ausnehmung 70 ist so dimensioniert, dass der Abschnitt des Rings 700 eine relative Bewegung zur Kugel 7 erfahren kann. Der Ring 700 und die Kugel 7 können sich somit relativ zueinander bewegen. Die Bewegung der Kugel 7 ist durch die Aufnahme des Ringabschnittes 700 insgesamt eingeschränkt. Insbesondere ist die Bewegung der Kugel 7 in dieser Ausführungsform auf eine translatorische Bewegung hin beschränkt. Die Einschränkung dieser Bewegung wird in dieser Ausführungsform durch eine Ausdehnung/Dimension der Ausnehmung 70, insbesondere durch das abgeschlossene Ende 70.2, beschränkt. Die Kugel 7 ist somit horizontal und relativ bezüglich des Rings 700 beweglich, wobei diese horizontale Bewegung ferner durch das abgeschlossene Ende 70.2 beschränkt ist - die Bewegung der Kugel ist in Fig. 11B demzufolge nach rechts beschränkt.

In dieser Ausführungsform dargestellt in Fig. 11A ist die beschränkte oder eingeschränkte Bewegung der Kugel 7 im Wesentlichen zu dem Kreismittelpunkt des im Wesentlichen zylinderförmigen Rings 700 orientiert. Das freie Ende 70.1 der Kugeln 7 zeigt in Richtung des Kreismittelpunkts des zylinderförmigen Rings 700.

Damit können die Kugeln 7 nicht radial nach innen in einen Innenbereich des Ringes 700 bewegt werden. Somit können die Kugeln 7 nur durch eine Bewegung der Kugeln 7 in Richtung des Außenbereiches des zylinderförmigen Rings 700 entnommen werden.

Die zwei oder mehreren Kugeln 7 umfassend der Ausnehmungen 70 und der Ring 700 können in die Anschlussvorrichtung, insbesondere in den Ausführungsformen der Anschlussvorrichtung gezeigt, in den Figuren integriert sein.

Damit können die zwei oder mehreren Kugeln 7, mittels der Aufnahme des Rings 700 und insbesondere während dem Herstellen des Verschlusses mit der Steckachse und/oder beim Lösen der Steckachse und/oder in einem geöffneten Zustand befindliche Anschlussvorrichtung, nicht vollständig aus dem für die zwei oder mehreren Kugeln 7 eingerichteten Bewegungsspielraum unvorhergesehen entfernt werden. Die zwei oder mehreren Kugeln 7 umfassend der Ausnehmungen 70 und der Ring 700 sind daher konstruiert, um ein unbeabsichtigtes Herausfallen der Kugeln aus dem Freiraum/Bewegungsspielraum zu verhindern.

Ein unbeabsichtigtes Herausfallen einer oder mehrerer der zwei oder mehreren Kugeln 7 aus dem für die Kugeln eingerichteten Freiraum/Bewegungsspielraum wird somit verhindert. Insbesondere wird ein Herausfallen von Kugeln für das Herstellen des Verschlusses mit der Steckachse und/oder für das Lösen der Steckachse und/oder in einem geöffneten Zustand der Anschlussvorrichtung verhindert.

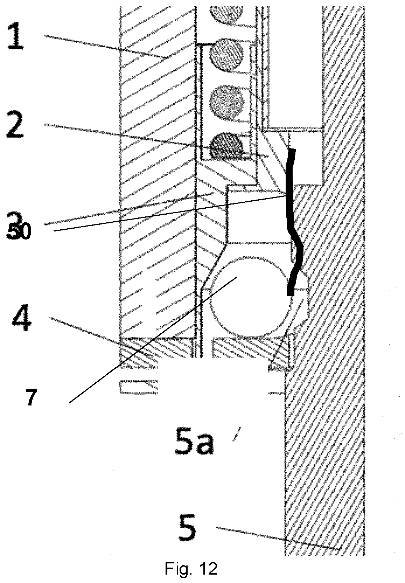

Fig. 12 zeigt eine weitere Ausführungsform der Anschlussvorrichtung und insbesondere ein weiteres Sicherungskonzept gegen das Herausfallen einer oder mehrerer Kugeln aus ihrem vorgesehenen Bewegungsspielraum. Diese Ausführungsform umfasst ein äußeres Gehäuse 1, ein inneres Gehäuse 2, einen Schieber 3, einen Deckel 4. Diese Anschlussvorrichtung ist geeignet einen Fahrradrahmen und ein Transportmittel mittels einer Steckachse 5 zu koppeln. Diese Ausführungsform der Anschlussvorrichtung kann eine zuvor gezeigte und/oder beschriebene Ausführungsform der Anschlussvorrichtung sein. Fig. 12 zeigt eine Anschlussvorrichtung in einem geöffneten Zustand, insbesondere ist der Verschluss mittels der zweiten Auflagefläche mit der Steckachse nicht hergestellt und/oder die Steckachse ist zum Lösen freigegeben.

Diese Ausführungsform der Anschlussvorrichtung umfasst ferner eine Sicherungsmembran 50. Die Sicherungsmembran 50 ist derart angeordnet, um ein Verlassen einer oder mehrerer der zwei oder mehreren Kugeln 7 aus dem Bewegungsspielraum zu verhindern. Die Sicherungsmembran 50 ist in dieser Ausführungsform in Radialrichtung nach innen betrachtet zwischen den zwei oder mehreren Kugeln 7 und der an die Anschlussvorrichtung zu koppelnden Steckachse 5 angeordnet. Damit wird der Freiraum mittels der Sicherungsmembran 50 teilweise abgegrenzt. Die Sicherungsmembran 50 ist ferner an dem Deckel 4 und an dem inneren Gehäuse 2 angebracht und erstreckt sich axial gesehen zwischen Deckel 4 und innerem Gehäuse 2. Die Sicherungsmembran 50 ist elastisch genug um die Bewegung der Kugeln 7 zu unterstützen, um insbesondere mittels der zweiten Auflagefläche einen Verschluss mit der Steckachse herzustellen und/oder die Steckachse freizugeben. Ferner sichert die Sicherungsmembran 50 die Kugeln 7 gegen ein unabsichtliches Herausfallen (aus dem Bewegungsspielraum).

In einer Ausführungsvariante der Sicherungsmembran 50 ist diese zwischen der zweiten Auflagefläche der zwei oder mehreren Kugeln 7 und der Steckachse 5 angeordnet. Mit anderen Worten ausgedrückt wird ein Formschluss zwischen der Anschlussvorrichtung und der Steckachse über die Sicherungsmembran 50 hergestellt und damit ein unbeabsichtigtes Herausfallen einer oder mehrerer Kugeln 7 verhindert.

Eine Ausführungsvariante der Sicherungsmembran 50 kann ein Netz, das mindestens ein Loch aufweist, umfassen. Das Loch ist derart orientiert und/oder geeignet, dass das Netz von der zweite Auflagefläche mittels des Lochs beabstandet ist. Mit anderen Worten und im Gegensatz zu der Ausführungsvariante der Sicherungsmembran 50 mit direktem Kontakt zwischen der zweiten Auflagefläche und der Steckachse 50 im gekoppelten Zustand zwischen Anschlussvorrichtung und Steckachse, besteht mittels des Lochs gerade kein direkter Kontakt.

Damit wird eine vorteilhafte Wirkung erzeugt, dass mittels des Loches das Netz der Sicherungsmembran 50, insbesondere während dem Lösen und Koppeln der Anschlussvorrichtung und der Steckachse, die Gefahr einer Beschädigung verringert wird.

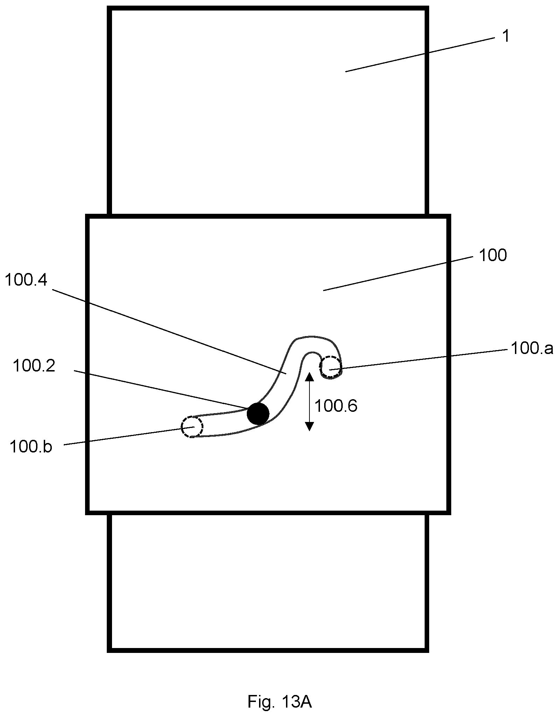

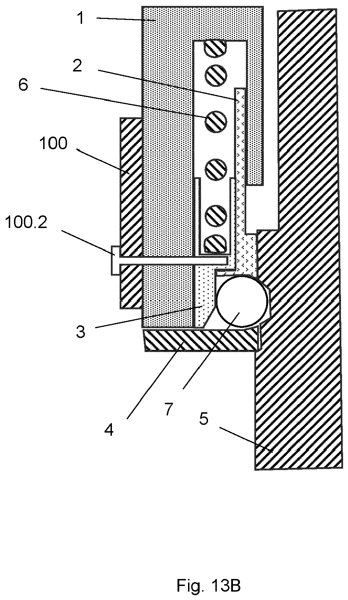

Die Figuren 13A und 13B zeigen eine Ausführungsform der Anschlussvorrichtung, wobei insbesondere der Griff 8 durch eine Manschette 100 austauschbar ersetzt ist. Allgemein kann die Anschlussvorrichtung, anstatt des Griffs 8 eine Manschette 100 umfassen.

Die Figur 13A zeigt eine Ansicht der Anschlussvorrichtung mit der Manschette 100. Die Figur 13B zeigt einen Ausschnitt eines Schnittes durch die Anschlussvorrichtung in einem verschlossenen Zustand der Anschlussvorrichtung mit der Manschette 100.

Die Manschette 100 grenzt (außen) an das äußere Gehäuse 1 an. Die Manschette 100 erfüllt im Wesentlichen die Funktion des Griffs 8, insbesondere die Funktion, und zwar, durch eine Bewegung des Griffs, den Verschluss mit der Steckachse herzustellen und/oder die Steckachse zum Lösen freizugeben. Die Ausführungsform der Anschlussvorrichtung in Fig. 13A umfasst ferner einen Stift oder Pin 100.2. in einer anderen Ausführungsvariante der Anschlussvorrichtung umfasst diese mindestens einen Stift 100.2, insbesondere drei oder vier Stifte, die über den Umfang der Manschette 100 verteilt sind.

Der Stift 100.2 ist in Kontakt mit dem Schieber 3. Über den Kontakt kann eine Bewegung des Stifts 100.2 und eine Bewegung des Schiebers 3 gekoppelt werden.

Die Bewegung des Schiebers 3 ist geeignet einen Freiraum oder Bewegungsspielraum zu schaffen, mittels dem die zwei oder mehreren Kugeln 7 bewegbar sind, um die Steckachse 5 zu dem Lösen freizugeben. Die Bewegung des Schiebers 3 ist ferner geeignet den Freiraum oder Bewegungsspielraum einzuschränken, mittels dem die Bewegbarkeit der zwei oder mehreren Kugeln 7 eingeschränkt ist, um den Verschluss mit der Steckachse 5 herzustellen.

Die Manschette 100 umfasst ferner eine Führungsbahn 100.4, die geeignet ist eine Bewegung der Manschette 100 und die Bewegung des Stifts 100.2 zumindest teilweise zu koppeln. Die Führungsbahn 100.4 in der dargestellten Ausführungsform ist eine Ausnehmung in der Manschette 100, die ausgebildet ist, um den Stift 100.2 aufzunehmen und den Stift 100.2 entlang der Ausnehmung zu führen. Durch eine Bewegung der Manschette 100 wird der Stift entlang der Führungsbahn geführt bzw. bewegt. In dieser Ausführungsform umfasst die Bewegung der Manschette eine rotatorische Bewegung. Die Bewegung der Manschette 100 veranlasst mittels der Führungsbahn 100.4 die Bewegung des Stiftes 100.2, wobei die Bewegung des Stiftes 100.2 ferner die Bewegung des Schiebers 3 veranlasst. Die Bewegung des Schiebers 3 ist in dieser Ausführungsform nur eine translatorische Bewegung. Mit anderen Worten ist die Bewegung der Manschette 100, die Bewegung des Stifts 100.2 und die Bewegung des Schiebers 3 kinematisch gekoppelt. Dadurch veranlasst die Bewegung der Manschette 100 den Verschluss mit der Steckachse 5 herzustellen und/der das Freigeben zum Lösen der Steckachse.

Die Manschette 100 umfasst ferner eine erste 100.a und eine zweite Endposition 100.b. Die Führungsbahn 100.4 ist durch die erste und die zweite Endposition begrenzt. Die Bewegung des Stifts 100.2 ist durch die erste und die zweite Endposition begrenzt. Befindet sich der Stift 100.2 an der zweiten Endposition 100.b ist der Verschluss mit der Steckachse 5 hergestellt. Befindet sich der Stift 100.2 an der ersten Endposition 100.a ist die Steckachse 5 zum Lösen freigegeben. Die in der Fig. 13A dargestellte Ausführungsform zeigt einen Zustand, in dem sich der Stift 100.2 zwischen der ersten 100.a und der zweiten Endposition 100.b befindet.

Die Führungsbahn 100.4 umfasst ferner eine vertikale Beabstandung 100.6 zwischen der ersten 100.a und der zweiten Endposition 100.b. Wenn die Manschette 100 oder der Stift 100.2 von einem Ende zu einem anderen Ende bewegt wird, wobei das eine und das andere Ende jeweils das erste 100.a oder das zweiten Endposition 100.b sein kann, entspricht die Beabstandung 100.6 der translatorischen Bewegung des Schiebers 3.

Die Führungsbahn 100.4, wie in Fig. 13A gezeigt, umfasst, beginnend von der zweiten Endposition 100.b und in Richtung der ersten Endposition 100.a und entlang der Führungsbahn 100.4, einen ersten Abschnitt mit zunehmender Steigung; und einen an dem ersten Abschnitt angrenzenden zweiten Abschnitt, der eine Abnahme einer Steigung der Führungsbahn 100.4 umfasst. Die Führungsbahn 100.4 umfasst ferner ein Extremum innerhalb des zweiten Abschnittes. Das Extremum ist in dieser Ausführungsform ein Hochpunkt innerhalb des zweiten Abschnittes. Das Extremum kann ein unbeabsichtigtes Bewegen der Manschette 100 oder Freigabe der Steckachse verhindern.

Die Ausführungsform wie in den Figuren 13A und 13B dargestellt benötigt vorteilhafte einen geringen Kraftaufwand für das Herstellen des Verschlusses mit der Steckachse und/oder dem Freigeben zum Lösen der Steckachse im Vergleich zu einer Ausführungsform ohne die Verwendung der Manschette 100. Die Manschette 100 ist geeignet die Bewegung des Schiebers 3, insbesondere die Bewegung des Schiebers 3 die erforderlich für das Herstellen des Verschlusses mit der Steckachse und/oder dem Freigeben zum Lösen der Steckachse ist, zu "übersetzen". Das wird unter anderem durch die Steigung der Führungsbahn 100.4 beeinflusst. Die Bewegung der Manschette 100 ist größer bzw. länger als die dafür äquivalente Bewegung des Schiebers 3. Das resultiert in einem geringeren Kraftaufwand für die Bewegung der Manschette.

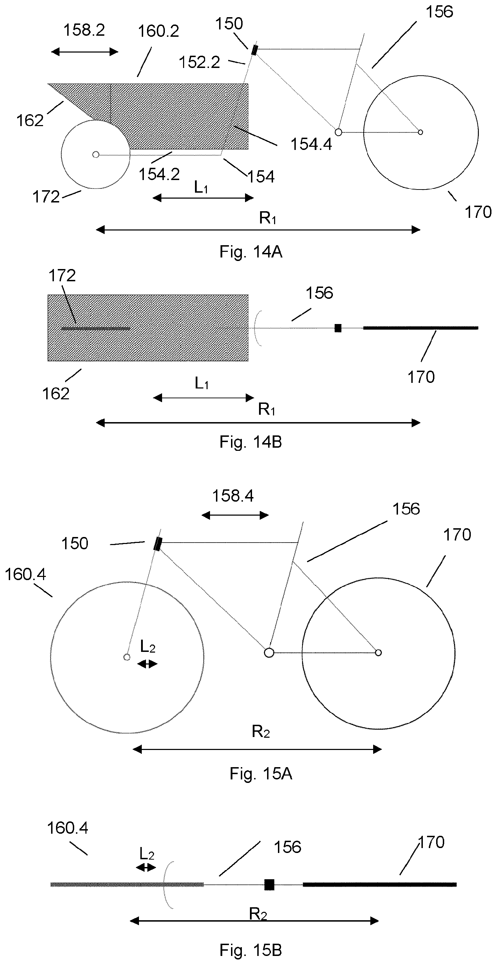

Die Figuren 14A und 14B zeigen eine Ausführungsform eines Fahrrads mit Transportmittel bzw. modularem Lastenvorderteil und stellt somit ein Lastenfahrrad dar. Die Ausführungsform umfasst ein Transportmittel 160.2, eine Anschlussvorrichtung 150 eine Steckachse 152.2 und einen Fahrradrahmen 156. Die Anschlussvorrichtung 150 ist ausgestaltet, um mittels der Steckachse 152.2 den Fahrradrahmen 156 und das Transportmittel 152.2 in nur einem Anbindungspunkt zu kuppeln.

Die Anschlussvorrichtung 150 kann in einem Steuerrohr des Fahrradrahmens 156 integriert sein oder als Bestandteil des Transportmittels enthalten sein. Das Transportmittel ist mit der Steckachse 152.2 so ausgebildet, dass die Aufnahme der Steckachse 152.2 in die Anschlussvorrichtung 150 dazu führt, dass das Transportmittel mit dem Rahmen des Fahrrads verbunden ist. Die Anschlussvorrichtung 150 ist ausgestaltet, den Fahrradrahmen 156 und das Transportmittel 152.2 in nur einem Anbindungspunkt austauschbar zu kuppeln bzw. zu verbinden.

Das Transportmittel 160.2, gezeigt in den Figuren 14A und 14B, weist eine räumliche Erstreckung bzw. eine Länge in einer Längsrichtung 158.2 auf. Die Figur 14B zeigt das Fahrrad gemäß der Ausführungsform in einer Draufsicht. Die Ausführungsform zeigt das Fahrrad in einem gekuppelten und fahrbereiten Zustand, d.h., das Transportmittel ist über die Anschlussvorrichtung mit dem Rahmen verbunden. In dieser Ausführungsform meint die Längsrichtung eine Richtung der längsten Erstreckung des Fahrrads und eine Richtung, die im Wesentlichen parallel zu einer Laufrichtung des Fahrrads ist.

Das Transportmittel 160.2 umfasst ferner einen Lastaufsatz 154 zum Transport eines Körpers. Der Körper kann, wie in dem Ausführungsbeispiel gezeigt, eine Transportbox 162 umfassen. Die Transportbox kann weiterhin eine Transportbox wie in den Figuren 7 bis 9 gezeigt, sein.

Das Transportmittel 160.2 umfasst ferner eine Beabstandung Li, die ein Abstand in Längsrichtung zwischen der Anschlussvorrichtung 150 und dem Schwerpunkt des Transportmittels darstellt. Der Schwerpunkt ist in dieser Ausführungsform der Massenmittelpunkt des Transportmittels 160.2. L₁ kann sich in manchen Ausführungsformen zumindest auf 0,3 m belaufen.

Der Fahrradrahmen 156 weist zudem ein Hinterrad 170 auf. Im vorliegenden Ausführungsbeispiel weist das Transportmittel 160.2 ein einziges Rad 172 auf. Das Transportmittel kann jedoch auch eine Vielzahl von Rädern aufweisen. Das Fahrrad gemäß dem Ausführungsbeispiel in den Figuren 14A und 14B weist einen Radstand Ri zwischen dem Rad 172 am Transportmittel 160.2 und dem Rad 170 am Fahrradrahmen 156 am. Ri stellt eine Länge in Richtung der Längsrichtung 158.2 des Fahrrads zwischen den radialen Mittelpunkten der beiden Räder dar. Die Länge Ri stellt eine horizontale Länge dar. Ri kann sich in manchen Ausführungsformen auf 1,7 bis 2,5 m belaufen. Das Verhältnis von f₁ = R₁/L₁ kann in manchen Ausführungsformen Werte zwischen 0,6 und 6 umfassen.

Die Ausführungsform dargestellt in den Figuren 15A und 15B zeigt ein Fahrrad mit einem Radvorderteil 160.4 und stellt somit ein konventionelles Fahrrad bzw. ein Standardfahrrad dar. Gemäß dieser Ausführungsform umfasst das Fahrrad einen Fahrradrahmen 156, eine Anschlussvorrichtung 150, ein Rad 170 am Fahrradrahmen 156 und ein Radvorderteil 160.4. Der Grundaufbau bestehend aus Fahrradrahmen 156, Anschlussvorrichtung 150 und Rad 170 am Fahrradrahmen 156 ist in dieser Ausführungsform identisch mit dem Fahrradrahmen 156, der Anschlussvorrichtung 150 und dem Rad 170 am Fahrradrahmen 156 der in den Figuren 14A und 14B dargestellten Ausführungsform. Erfindungsgemäß ermöglicht dies, basierend auf einem einzigen (Grund-)Rahmen Fahrräder mit unterschiedlichen Funktionen mit wenigen Handgriffen zu schaffen. Die Anschlussvorrichtung ermöglicht, dass neben einem üblichen Radvorderteil eines Standardfahrrads verschiedene Transportmodule mit ein und demselben Rahmen schnell austauschbar verwendet werden können.

Im Unterschied zu der Ausführungsform dargestellt in den Figuren 14A und 14B ist der Fahrradrahmen 156 in der Ausführungsform gemäß Figuren 15A und 15B mit einem Radvorderteil 160.4 eines Standardfahrrads gekuppelt. Ein solches Radvorderteil 160.4 ist nicht für den Lastentransport ausgebildet. Diese Ausführungsform weist zudem andere Längenverhältnisse zwischen dem Schwerpunkt des Radvorderteils und der Anschlussvorrichtung auf, als die Ausführungsform in den Figuren 14A und 14B zwischen dem Schwerpunkt des Transportmittels und der Anschlussvorrichtung. Die Anschlussvorrichtung 150 ist eingerichtet, den Fahrradrahmen 156 und das Radvorderteil 160.4 in nur einem Anbindungspunkt austauschbar zu kuppeln. Die Verortung des Anbindungspunktes zum Kuppeln des Radvorderteils 160.4 und des Transportmittel 160.2 ist in beiden Ausführungsformen identisch. Die Anschlussvorrichtung 150 zum Kuppeln des Radvorderteils 160.4 und des Transportmittels 160.2 ist in beiden Ausführungen identisch.

Das Fahrrad dargestellt in den Figuren 15A und 15B umfasst ferner zwei verschiedene Beabstandungen L₂ und R₂. Das Fahrrad gemäß dieser Ausführungsform weist eine Längsrichtung 158.4 auf, die der Längsrichtung 158.2 entspricht, d.h., L₂ ist ein Abstand in Längsrichtung 158.4 zwischen der Anschlussvorrichtung und dem Schwerpunkt des Radvorderteils. R2 stellt den Radstand zwischen einem Rad am Radvorderteil 160.4 und dem Rad 170 am Fahrradrahmen 156 dar.

Das Fahrrad gemäß der Ausführungsform in den Figuren 14A und 14B zeigt den Fahrradrahmen 156 in verbundenem Zustand mit einem Transportmittel und stellt somit ein Lastenfahrrad dar. Das Fahrrad gemäß der Ausführungsform in den Figuren 15A und 15B zeigt den Fahrradrahmen 156 in verbundenem Zustand mit einem Radvorderteil und stellt somit ein Standardfahrrad dar. Über die Anschlussvorrichtung können an den Fahrradrahmen verschiedene Module angeschlossen werden und so Fahrräder mit verschiedenen Funktionsansprüchen geschaffen werden. Vorteilhaft erfolgt die Austauschbarkeit der Module mit wenigen Handgriffen, sodass beispielsweise ein Standardfahrrad, wie in den Figuren 15A und 15B gezeigt über die Anschlussvorrichtung durch Austauschen des Radvorderteils durch ein Transportmittel einfach und schnell in ein Lastenfahrrad umgewandelt werden kann. Die Fahrräder der beiden Ausführungsformen unterscheiden sich insbesondere dadurch, dass L₁ bei dem Fahrrad mit dem Transportmittel 160.2 größer als L₂ bei dem Fahrrad mit dem Radvorderteil ist. Analoges gilt für Ri und R₂, wobei R₁ > R₂ gilt.

Die Anschlussvorrichtung 150 ist derart ausgestaltet, dass der Fahrradrahmen nicht nur mit dem Radvorderteil 160.4 sondern auch mit dem Transportmittel 160.2 in nur einem Anbindungspunkt gekuppelt werden kann und die auftretenden Lasten bzw. Momente zwischen Rahmen und dem jeweiligen Vorderteil übertragen werden.

Die Ausführungsformen in den Figuren 14A und 14B und in den Figuren 15A und 15B können ein Wechselsystem darstellen. Damit ist gemeint, dass ein in den Figuren 15A und 15B dargestelltes Standardfahrrad mit Anschlussvorrichtung in ein Lastenfahrrad, dargestellt in den Figuren 14A und 14B, bzw. umgekehrt ein Lastenfahrrad in ein Standardfahrrad umgewandelt werden kann. Das Wechselsystem umfasst einen Fahrradrahmen 156 mit mindestens einem Hinterrad 170, eine Anschlussvorrichtung 150, und ein erstes 160.2 und zweites jeweils über eine Steckachse kuppelbares Fahrradvorderteil 160.4. Die Anschlussvorrichtung ist in einem Steuerrohr des Fahrradrahmens 156 integriert ist oder die Anschlussvorrichtung ist ein Steuerrohr des Fahrradrahmens 156. Die Anschlussvorrichtung156 ist ferner über die zumindest eine Steckachse jeweils mit dem ersten 160.2 und dem zweiten Fahrradvorderteil 160.4 koppelbar. Die Anschlussvorrichtung ist ferner geeignet, den Fahrradrahmen 156 und das jeweilige Fahrradvorderteil 160.2 oder 160.4 in nur einem Anbindungspunkt austauschbar zu kuppeln. Das erste Fahrradvorderteil ist ein Transportmittel 160.4, wobei das System bei gekoppeltem Transportmittel ein Lastenfahrrad darstellt, und das zweite Fahrradvorderteil ein Radvorderteil 160.4 ist, wobei das System bei gekoppeltem Radvorderteil ein Fahrrad darstellt.

Vorteilhaft ist damit möglich, dass auf Grundlage eines einzigen Fahrradrahmen über die Anschlussvorrichtung sowohl ein Fahrradvorderteil eines Standardfahrrads, als auch ein Fahrradvorderteil eines Lastenfahrrads mit diesem Rahmen gekuppelt werden kann. Damit erübrigen sich zwei getrennte und im Wesentlichen redundante Bestandteile eines konventionellen Fahrrads und eines Lastenfahrrades ohne die erfindungsgemäße Anschlussvorrichtung.

Die Umwandlung von einem Fahrrad in ein Lastenfahrrad und/oder vice versa mittels der Anschlussvorrichtung ist nach einem der vorstehenden Ausführungsformen einfach und schnell durchführbar. Das Kuppeln kann durch die Betätigung des Griffs 8 oder die Bewegung der Manschette 100 einfach erfolgen. Damit ist der Vorgang des Kuppelns (d.h. des Lösens und Verbindens) zwischen Steckachse und Anschlussvorrichtung ohne Werkzeuge durchführbar.

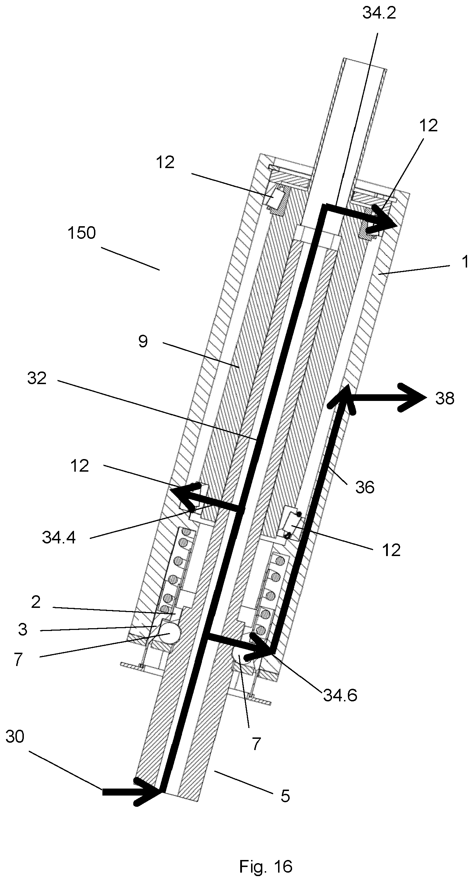

Die Fig. 16 zeigt eine Ausführungsform umfassend eine Anschlussvorrichtung 150 und eine Steckachse 5 in einem gekuppelten Zustand mit darin schematisch eingezeichneten wirkenden Lasten. Die Anschlussvorrichtung 150 und die Steckachse 5 können in dieser Ausführungsform eine Anschlussvorrichtung und/oder Steckachse in den zuvor gezeigten Ausführungsformen oder Ausführungsbeispiele oder Varianten sein. Die Ausführungsform umfasst ferner einen an das äußere Gehäuse 1 angeschlossenen oder verbunden Fahrradrahmen 156.

Die Anschlussvorrichtung 150 umfasst zwei oder mehrere Kugeln 7, Lager 12, ein äußeres Gehäuse 1, eine Welle 9.

Die Figur 16 zeigt einen beispielhaften Lastverlauf oder Lastfluss, der mittels Lastpfeilen oder Lastvektoren 30, 32, 34.2,34.4,34.6, 36 und 38 symbolisch dargestellt ist. Die Lastvektoren können Kraftvektoren sein.

Im Folgenden wird anhand der Figur 16 gezeigt wie eine Last, dargestellt durch den Lastvektor 30 mittels der Anschlussvorrichtung 150 auf den Fahrradrahmen übertragen bzw. transferiert werden kann. Der Lastvektor 38 stellt die übertragene Last (mittels der Anschlussvorrichtung 150) auf den Fahrradrahmen dar.

Der Lastvektor 30 ist an der Steckachse 5 verortet. Der Lastvektor 30 kann eine innere oder äußere Last in oder auf der Steckachse 5 sein. Der Lastvektor 30 kann eine resultierende Last einer äußeren Belastung beispielsweise auf ein an der Steckachse 5 angebrachtes oder verbundenes Transportmittel 160.2 oder Radvorderteil 160.4 sein.

Die Last auf oder in der Steckachse 5, dargestellt durch den Lastvektor 30, wird entlang der Längsrichtung der Steckachse 5 übertragen. Das ist durch den Lastvektor 32 symbolisch dargestellt.

Die Last entlang der Längsrichtung der Steckachse 5, dargestellt durch den Lastvektor 32, wird auf die Welle 9, dargestellt durch den Lastvektoren 34.2 und 34.4, und auf die zwei oder mehreren Kugeln 7, dargestellt durch den Lastvektor 34.6, übertragen. Die Übertragung auf die Welle 9 (Lastvektoren 34.2 und 34.4) wird mittels der an der Welle 9 umfassenden ersten Auflagefläche realisiert. Die Übertragung auf die zwei oder mehreren Kugeln 7 (Lastvektor 34.6) wird mittels der an den zwei oder mehreren Kugeln 7 umfassenden zweiten Auflagefläche realisiert.

Die auf die zwei oder mehreren Kugeln 7 übertragene Last wird insbesondere mittels eines Schiebers 3 und eines inneren Gehäuses 2 auf das äußere Gehäuse übertragen. Die auf die Welle 9 übertragene Last wird mittels der Lager 12 auf das äußere Gehäuse 1 übertragen. Die auf das äußere Gehäuse 1 übertragene Last wird, dargestellt durch den Lastvektor 36 an eine Koppelstelle zwischen dem äußeren Gehäuse 1 und dem Fahrradrahmen 156 transferiert. Die Koppelstelle kann ein Flächenschwerpunkt des zwischen dem äußeren Gehäuse 1 und dem Fahrradrahmen 156 verbundenem Querschnitt sein.

In Abhängigkeit einer Ausrichtung oder Orientierung des Lastvektors 30 können einzelne, mehrere oder sämtliche Kugeln 7 und/oder einzelne, mehrere oder sämtliche Lager 12 eine Last transferieren. Die Anschlussvorrichtung 150 ist ebenso geeignet eine Last am oder im Fahrradrahmen auf die Steckachse 5 zu transferieren oder zu übertragen.

Der in der Fig. 16 dargestellter Lastverlauf ist ein schematisch und vereinfachter Lastverlauf. Der in der Figur 16 dargestellte Lastverlauf kann eine Approximation eines tatsächlichen Lastverlaufs sein.

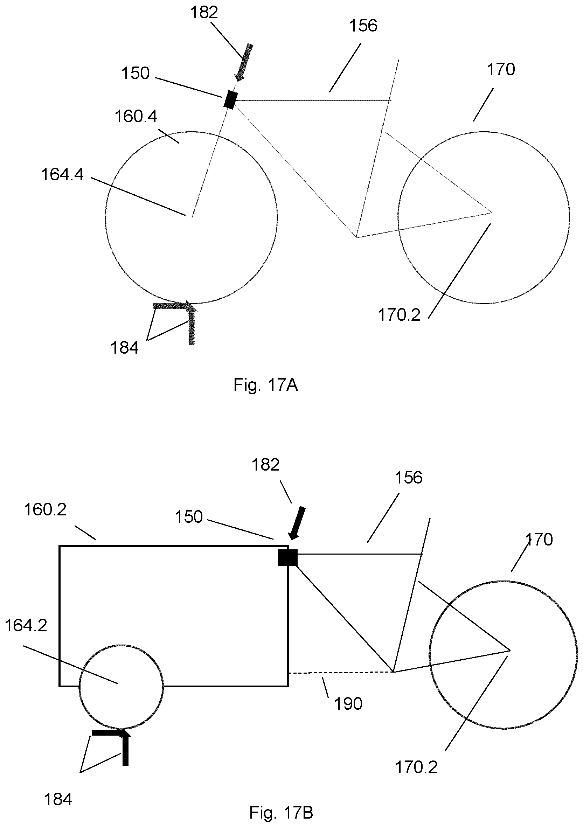

Die Fig. 17A zeigt eine Ausführungsform, bei dem ein Radvorderteil 160.4 an die Anschlussvorrichtung gekuppelt ist und stellt somit ein Standardfahrrad dar. Diese Ausführungsform umfasst eine Anschlussvorrichtung 150, einen Fahrradrahmen 156, ein Radvorderteil 160.4 und ein Hinterrad 170. Das Radvorderteil 160.4 umfasst ein Vorderrad. Die Ausführungsform dargestellt in Figur 17A ist vergleichbar mit der Ausführungsform dargestellt in den Figuren 15A und 15B.

In der Ausführungsform gemäß Figur 17A sind ein Kraftvektor 182 und Auflagekraftvektoren 184 eingezeichnet, um die wirkenden Kräfte zu veranschaulichen. Die Auflagekraftvektoren 184 entstehen dadurch, dass sich das Vorderrad auf einem Untergrund befindet. Der Kraftvektor 182, der eine Druckkraft darstellt und die Auflagekraftvektoren 184 sind im Wesentlichen im Gleichgewicht. Das System transferiert die Belastung auf das System dargestellt durch den Kraftvektor 182 und die Auflagekraftvektoren 184 im Wesentlichen mittels der Anschlussvorrichtung 150 zwischen dem Rahmen 158 und dem Radvorderteil 160.4.

Eine Last, die mittels der Anschlussvorrichtung 150 zwischen dem Fahrradrahmen 156 und dem Radvorderteil 160 zu transferieren ist, ist im Wesentlichen nur eine Kraft. Mit anderen Worten ausgedrückt ist die Last im Ausführungsbeispiel nach Figur 17A im Wesentlichen kein Moment und auftretende Momente können im Verhältnis zu der wirkenden Kraft unberücksichtigt bleiben. Die auftretende Last wirkt vergleichbar mit den Lastvektoren 30 und 38 aus Fig. 16, wobei für die Ausführungsform in Figur 17A die Lastvektoren 30 und 38 im Wesentlichen parallel zueinander sind und im Wesentlichen auf einer gemeinsamen Wirkungslinie verortet sind. Damit transferiert die Anschlussvorrichtung 150 im wesentlichen nur Kräfte. Dies rührt daher: ein Drehpunkt 164.4 oder eine Rotationsachse 164.4 des Rades des Radvorderteils 160.4 liegt im Wesentlichen auf der Wirkungslinie des Kraftvektors 182. Die Beabstandung zwischen dem Drehpunkt 164.4 und der Anschlussvorrichtung 150 (vergleichbar mit dem Abstand L₂ aus Figur 15A und 15B), die ein Moment hervorrufen kann, ist sehr gering und im Vergleich zu der Kraft vernachlässigbar

Die Fig. 17B zeigt eine Ausführungsform bei dem ein Transportmittel 160.2 an die Anschlussvorrichtung gekuppelt ist und stellt somit ein Lastenfahrrad dar. Diese Ausführungsform umfasst eine Anschlussvorrichtung 150, einen Fahrradrahmen 156, ein Transportmittel 160.2 und ein Hinterrad 170. Das Transportmittel 160.2 umfasst beispielhaft ein einziges Vorderrad. Die Ausführungsform dargestellt in Figur 17B ist vergleichbar mit der Ausführungsform dargestellt in den Figuren 14A und 14B. Die in der Fig. 17B gezeigten Ausführungsform zeigt ein mittels der Anschlussvorrichtung 150 gekuppeltes Lastenfahrrad. Die Anschlussvorrichtung kuppelt das Transportmittel 160.2 und den Fahrradrahmen 156 in nur einem Anbindungspunkt. Fig. 17B zeigt auch eine Strebe 190, die erfindungsgemäß weggelassen werden kann. Die erfindungsgemäße Anschlussvorrichtung ermöglicht gerade eine Kupplung mit einem Lastenvorderteil in nur einem einzigen Anbindungspunkt, sprich ohne die Strebe 190. Im Folgenden wird die Wirkung der Strebe 190 dennoch beispielhaft erläutert, um die vorteilhafte Funktion der erfindungsgemäßen Anschlussvorrichtung klarzustellen. Die Ausführungsform dargestellt in Figur 17B ist in analoger Weise wie in Fig. 17A dargestellt, nämlich mit einer Kraft dargestellt durch den Kraftvektor 182 und den Auflagerkraftvektoren 184. Der Kraftvektor 182 ist an dem Fahrradrahmen 156 verortet und wird im Wesentlichen mittels der Anschlussvorrichtung 150 zwischen dem Fahrradrahmen 156 und dem Transportmittel 160.2 transferiert.

Die an der Anschlussvorrichtung zu transferierende Last ist in dieser Ausführungsform und im Gegensatz zu der Ausführungsform dargestellt in Fig. 17A im Wesentlichen ein Moment. Dies rührt daher: Bedingt durch den nur einen Anbindungspunkt zwischen dem Transportmittel 160.2 und dem Fahrradrahmen 156 und der Beabstandung zwischen einem Drehpunkt 164.2 oder eine Rotationsachse 164.2 des Rades des Transportmittels 160.2 und der Anschlussvorrichtung 150, geht die Druckkraft, dargestellt durch den Kraftvektor 182 nicht direkt in den Bodenkontaktpunkt. Dadurch resultieren zusätzliche Momente, wobei das Moment im Verhältnis zu einer transferierenden Kraft und im Gegensatz zu der Ausführungsform dargestellt in Fig. 17A nicht mehr vernachlässigbar ist. Die Beabstandung entspricht dem Abstand L₁ aus Figur 14A und 14B, die größer ist als die Beabstandung bei einem Standardfahrrad wie in Fig. 17A bzw. in den Fig. 15A und 15B. Der Einsatz einer Strebe 190 würde das mittels der Anschlussvorrichtung 150 zu transferierende Moment zwischen dem Transportmittel 160.2 und dem Fahrradrahmen 156 reduzieren. Die Strebe 190 würde das durch die größere Beabstandung L₁ auftretendende zusätzliche Moment abfangen. Die erfindungsgemäße Anschlussvorrichtung 150 ist derart ausgebildet, die auftretenden Momente und Lasten gerade ohne Strebe 190 abzufangen.

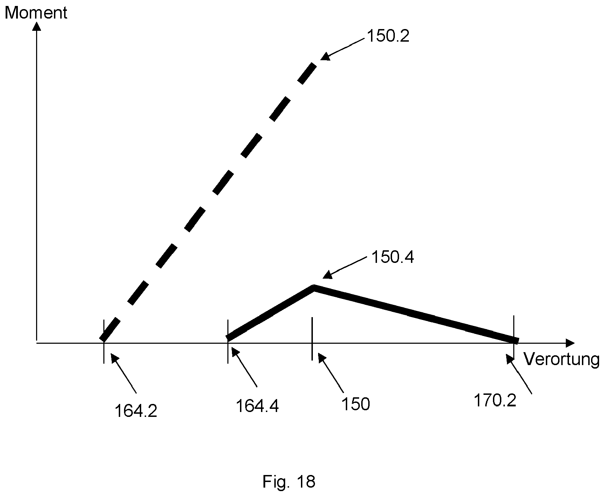

Fig. 18 zeigt Momentenverläufe unterschiedlicher Ausführungsformen und zwar eines Fahrrads mit gekuppeltem Transportmittel 160.2 und eines Fahrrads mit gekuppeltem Radvorderteil 160.4. Die Ausführungsform basierend auf den strichliert dargestellten Momentenverlauf ist vergleichbar mit einer Ausführungsform dargestellt in den Figuren 17B (ohne Strebe 190) und 14A und 14B. Die Ausführungsform basierend auf den durchgezogen dargestellten Momentenverlauf ist vergleichbar mit einer Ausführungsform dargestellt in den Figuren 17A und 15A und 15B. Der strichliert dargestellte Momentenverlauf ist zwischen dem Drehpunkt des Rades 164.2 am Transportmittel 160.2 und der Anschlussvorrichtung 150 dargestellt. Ein Extremum 150.2 dieses Momentenverlaufs ist an der Stelle der Kupplung 150 verortet. Das Extremum 150.2 kann beispielsweise 2000 Nm betragen.

Der durchgezogen dargestellte Momentenverlauf ist zwischen dem Drehpunkt des Rades 164.4 des Radvorderteils 160.4 und der Anschlussvorrichtung 150 und einen Drehpunkt des Hinterrades 170.2 dargestellt. Ein Extremum 150.4 dieses Momentenverlaufs ist an der Stelle der Kupplung 150 verortet. In einer Ausführungsform kann ein Faktor von 2 bis 10 zwischen dem Extremum 150.2 und dem Extremum 150.4 bestehen ("Faktor" = "Extremum 150.2" / "Extremum 150.4").

Ein Extremum eines Momentenverlaufs der Ausführungsform dargestellt in Figur 17B mit optionaler Strebe 190 ist im Wesentlichen in einem Momentenbereich um das Extremum 150.4 verortet (nicht dargestellt).

Die Koppelung mit dem Transportmittel 160.2 verändert das zu übertragene Moment 150.2 im Vergleich zu der Koppelung mit dem Radvorderteils 160.4. Fig. 18 stellt dar, dass die Lasten bei normalen Fahrrädern bzw. Lastenfahrrädern mit Strebe im Bereich der Anschlussvorrichtung 150 deutlich geringer sind als die Lasten, die durch die erfindungsgemäße Anschlussvorrichtung in einem mit einem Lastenvorderteil bzw. Transportmittel gekuppelten Zustand aufgenommen werden können muss.

Ein erstes Beispiel umfasst ein Set zum Umwandeln eines Fahrrads in ein Lastenfahrrad, insbesondere eines E-Bikes in ein E-Lastenfahrrad, umfassend ein modulares Transportmittel mit einem modularen Vorderteil und eine Anschlussvorrichtung, wobei das Fahrrad, insbesondere das E-Bike, einen Rahmen mit einem Vorbau und eine über ein Steuerrohr am Rahmen befestigte Steuereinheit umfasst, dadurch gekennzeichnet, dass die Anschlussvorrichtung nur aus einer Befestigungskonstruktion besteht.

Ein Set zum Umwandeln eines Fahrrads in ein Lastenfahrrad, insbesondere eines E-Bikes in ein E-Lastenfahrrad In einem weiteren Beispiel ist die Anschlussvorrichtung nur an einem Anbindungspunkt, insbesondere an einem vorderen Anbindungspunkt, des Rahmens befestigt.

In einem weiteren Beispiel verbleibt die Steuereinheit durchgängig am Rahmen bei der Umwandlung des Fahrrads zu einem Lastenfahrrad, insbesondere des E-Bikes zu einem E-Lastenfahrrad, und wird nicht demontiert.

In einem weiteren Beispiel kann die Anschlussvorrichtung komplett ohne Werkzeug an dem Rahmen montiert und/oder demontiert werden.

In einem weiteren Beispiel ist die Anschlussvorrichtung bei der Umwandlung des Fahrrads zu einem Lastenfahrrad, insbesondere des E-Bikes zu einem E-Lastenfahrrad, im dem modularen Vorderteil des modularen Transportmittels und/oder dem Steuerrohr des Fahrrads, insbesondere des E-Bikes, integriert.

In einem weiteren Beispiel ist die Anschlussvorrichtung eine abstützungsfreie, integrale Tri-Kupplung.

In einem weiteren Beispiel umfasst die Anschlussvorrichtung ein erstes äußeres Gehäuse, ein zweites inneres Gehäuse, einen oder mehrere Schieber, einen oder mehrere Deckel, eine oder mehrere Wellen, eine oder mehrere Federn und/oder zwei oder mehrere Kugeln. In einem weiteren Beispiel weist die Anschlussvorrichtung ein Feder-Kugelverschluss auf. In einem weiteren Beispiel verbindet die Anschlussvorrichtung Stromanschlüsse, transferiert Lasten und/oder ermöglicht Bewegungskopplungen.

In einem weiteren Beispiel umfasst das modulare Vorderteil des modularen Transportmittels
a. ein oder mehrere Führungselemente zum korrekten Ab- und Abkoppeln der Aufbauten und/oder
b. ein oder mehrere Sicherungselemente zur strukturellen Sicherung der Aufbauten und/oder
c. ein oder mehrere Mittel zur Stromversorgung des Aufbaus aufweist und/oder
d. ein oder mehrere Laufrollen zum schnellen An- und Abkoppeln der Aufbauten

In einem weiteren Beispiel umfassen die Sicherungselemente einen oder mehrere Fang- und Sicherungshaken, die automatisch einrasten.

In einem weiteren Beispiel kann das modulare Vorderteil eine Transportbox aufnehmen. In einem weiteren Beispiel weist das modulare Vorderteil eine oder mehrere Heiz- und/oder Kühlvorrichtungen auf.

In einem weiteren Beispiel umfasst die Transportbox zwei oder mehrere Standfüße, insbesondere vier Standfüße, die beim Ankoppeln automatisch einfahren und bei Abkoppeln automatisch ausfahren.

In einem weiteren Beispiel umfasst das modulare Vorderteil
a. einen passiven Insassenschutz, insbesondere Gurt und/oder Überrollbügel und/oder
b. Witterungsschutz für den Innenraum und/oder
c. eine Abdeckung, die Schutz bei Unfällen bietet und/oder die Sichtbarkeit des Fahrers auf Insassen des Vorbaus und auf den vor dem Transportsystem liegenden Weg gewährleisten.

## Patentansprüche

1. Eine Anschlussvorrichtung zum Kuppeln von einem Fahrradrahmen mit einem Fahrradvorderteil, wobei die Anschlussvorrichtung eingerichtet ist, um zumindest zwei unterschiedliche Fahrradvorderteile austauschbar zu kuppeln, die Anschlussvorrichtung umfassend:
ein Gehäuse mit einem ersten Anbindungspunkt an das Fahrradvorderteil und einem zweiten Anbindungspunkt an den Fahrradrahmen,
zwei oder mehrere Kugeln, die innerhalb eines Bewegungsspielraums angeordnet sind;
zumindest zwei Lager; und
eine drehbar gelagerte Welle;
wobei der erste Anbindungspunkt eine Aufnahmeöffnung zur Aufnahme einer Steckachse des Fahrradvorderteils in dem Gehäuse darstellt;
wobei das Gehäuse die Lager, die Welle und die zwei oder mehreren Kugeln umschließt;
wobei die Welle eingerichtet ist, die aufgenommene Steckachse formschlüssig zu verbinden, zur Übertragung von Steuerbewegungen,
wobei die Welle eine erste Auflagefläche für die Steckachse zum Transferieren einer Last zwischen dem Fahrradvorderteil über die Lager und das Gehäuse in den Fahrradrahmen umfasst; und
wobei die zwei oder mehreren Kugeln eine zweite Auflagefläche für die Steckachse umfassen, wobei die zweite Auflagefläche geeignet ist einen Verschluss mit der Steckachse herzustellen und/oder die Steckachse zu einem Lösen freizugeben,
wobei die Anschlussvorrichtung für das Transferieren von Lasten ausgelegt ist, die ein mit der Anschlussvorrichtung verbundenenes Transportmittel als Fahrradvorderteil erzeugt.

2. Die Anschlussvorrichtung nach Anspruch 1,
wobei das Gehäuse ein äußeres Gehäuse und ein inneres Gehäuse umfasst,
wobei das äußere Gehäuse jeweils als Anbindungspunkt an das Fahrradvorderteil und den Fahrradrahmen dient,
wobei das innere Gehäuse als eine innere Auflagefläche der Kugeln eingerichtet ist und einen Bewegungsspielraum eingrenzt,
wobei die Lager die Drehbarkeit der Welle ermöglichen, und wobei die Drehbarkeit der Welle eine relative Drehbarkeit bezogen auf das äußere Gehäuse ist.

3. Die Anschlussvorrichtung nach Anspruch 2, wobei
das äußere Gehäuse ferner einen Deckel umfasst;
wobei der Deckel die Aufnahmeöffnung umfasst;
wobei die zwei oder mehreren Kugeln gleichmäßig um die Aufnahmeöffnung verortet sind, und
wobei die um die Aufnahmeöffnung verorteten zwei oder mehreren Kugeln eine Zentrierung der Steckachse ermöglichen, wenn die Steckachse in das Gehäuse eingeführt wird.

4. Die Anschlussvorrichtung nach einem der Ansprüche 1 bis 3, wobei die Welle als Hohlwelle ausgebildet ist,
wobei eine elektrische Verbindung und/oder eine hydraulische Verbindung in der Hohlwelle integriert ist/sind; und
die elektrische Verbindung geeignet ist, einen Stromanschluss in der Steckachse über eine Steckverbindung zu verbinden und/oder zu lösen; und
die hydraulische Verbindung geeignet ist, einen Hydraulikanschluss in der Steckachse über eine Flachkupplung zu verbinden; und
das elektrische und/oder hydraulische Verbinden oder Lösen mittels des Herstellens und/oder Lösens des Verschlusses mit der Steckachse erfolgt.

5. Die Anschlussvorrichtung nach einem der Ansprüche 1 bis 4, ferner umfassend
einen Ring innerhalb des Gehäuses im Bereich der Aufnahmeöffnung der Steckachse;
wobei die zwei oder mehreren Kugeln jeweils eine Ausnehmung umfassen;
wobei der Ring in die Ausnehmungen der zwei oder mehreren Kugeln eingebracht ist, um eine Bewegung der zwei oder mehreren Kugeln einzuschränken, sodass ein Herausfallen der Kugeln durch die Öffung zur Aufnahme der Steckachse verhindert wird.

6. Die Anschlussvorrichtung nach einem der Ansprüche 1 bis 5, ferner umfassend,
einen Griff oder eine Manschette;
einen Schieber; und
eine oder mehrere Federn;
wobei
das äußere Gehäuse den Schieber und die eine oder mehreren Federn umgibt;
der Griff von dem Deckel beabstandet ist;
die Manschette von dem äußeren Gehäuse beabstandet ist;
wobei der Schieber
die einen oder mehreren Federn führt, und
eine Auflagefläche für die zwei oder mehreren Kugeln umfasst, wobei die Auflagefläche der zweiten Auflagefläche gegenüberliegt; und
wobei der Schieber mittels einer Bewegung des Griffs oder einer Bewegung der Manschette einen Freiraum schafft, in dem die zwei oder mehreren Kugeln bewegbar sind, um einen Verschluss mit der Steckachse herzustellen und/oder die Steckachse zu dem Lösen freizugeben.

7. Ein System zum Kuppeln von einem Fahrradrahmen mit einem Fahrradvorderteil, das System umfassend
eine Anschlussvorrichtung; und
eine Steckachse;
wobei
die Anschlussvorrichtung eine Öffnung aufweist, um die Steckachse aufzunehmen, um damit das Fahrradvorderteil mit der Anschlussvorrichtung zu koppeln; und
die Anschlussvorrichtung einen Anbindungspunkt aufweist, um mit dem Fahrradrahmen gekoppelt zu werden;
wobei die Anschlussvorrichtung eingerichtet ist, die durch das gekoppelte Fahrradvorderteil über die Steckachse auf die Anschlussvorrichtung wirkende Last aufzunehmen;
wobei die Kopplung der Steckachse mit der Anschlussvorrichtung in Form eines einzigen Anbindungspunkts zwischen dem Fahrradvorderteil und dem Fahrradrahmen ausgestaltet ist,
wobei die Steckachse ausgestaltet ist, um mit ihrem nicht aufgenommenen Ende an dem Fahrradvorderteil montiert bzw. demontiert zu werden, um ein austauschbares Anbringen von zumindest zwei Fahrradvorderteilen zu ermöglichen und/oder wenn die Steckachse integral mit dem Fahrradvorderteil verbaut ist, die Anschlussvorrichtung ausgestaltet ist, zumindest zwei unterschiedliche Fahrradvorderteile über deren jeweilige Steckachse austauschbar aufzunehmen.

8. Das System nach Anspruch 7, wobei die Anschlussvorrichtung eine Anschlussvorrichtung nach einem der Ansprüche 1 bis 6 ist.

9. Das System nach einem der Ansprüche 7 oder 8, wobei
die Steckachse zylinderförmig ausgebildet ist;
die Steckachse ferner ein Ende, einen ersten Abschnitt und einen zweiten Abschnitt umfasst; wobei
das Ende ausgelegt ist, in die Anschlussvorrichtung aufgenommen zu werden; und
der erste Abschnitt an das Ende angrenzt; und
der zweite Abschnitt an den ersten Abschnitt angrenzt; und
der erste Abschnitt ferner einen kleineren Durchmesser als der zweite Abschnitt umfasst;
der erste Abschnitt ferner ausgelegt ist die Lasten zu übertragen; und
der zweite Abschnitt ferner einen Rezess umfasst, wobei
der Rezess geeignet ist den Verschluss mit der Anschlussvorrichtung herzustellen und/oder die Anschlussvorrichtung zu dem Lösen freizugeben.

10. Ein Set zum Umwandeln eines Fahrrads in ein Lastenfahrrad, umfassend:
ein Transportmittel;
eine Anschlussvorrichtung; und
eine Steckachse;
wobei die Anschlussvorrichtung eine Aufnahmeöffnung aufweist, um mit der Steckachse austauschbar gekuppelt zu werden, wobei die Steckachse mit dem Transportmittel verbunden ist;
wobei die Anschlussvorrichtung über einen Anbindungspunkt mit einem Fahrradrahmen des Fahrrads kuppelbar ist, derart, dass das Transportmittel in nur einem Anbindungsspunkt mit dem Fahrradrahmen gekuppelt ist.

11. Das Set nach Anspruch 12, wobei die Anschlussvorrichtung und die Steckachse die Anschlussvorrichtung und die Steckachse nach einem der Ansprüche 1 - 6 oder 9 ist.

12. Ein Wechselsystem zum Umwandeln eines Standardfahrrads in ein Lastenfahrrad und umgekehrt, umfassend:
einen Fahrradrahmen mit mindestens einem Hinterrad,
eine Anschlussvorrichtung,
zumindest eine Steckachse; und
ein erstes Fahrradvorderteil und ein zweites Fahrradvorderteil;
wobei
die Anschlussvorrichtung über die zumindest eine Steckachse jeweils mit dem ersten und zweiten Fahrradvorderteil austauschbar koppelbar ist;
die Anschlussvorrichtung den Fahrradrahmen und das jeweilige gekoppelte Fahrradvorderteil in nur einem Anbindungspunkt austauschbar kuppelt; und
wobei das erste Fahrradvorderteil ein Transportmittel ist und das System bei gekoppeltem Transportmittel ein Lastenfahrrad darstellt, und
wobei das zweite Fahrradvorderteil ein Radvorderteil ist und das System bei gekoppeltem Radvorderteil ein Standardfahrrad darstellt.

13. Das Wechselsystem nach Anspruch 12, wobei das Lastenfahrrad gegenüber dem Standardfahrrad unterschiedliche Beabstandungen aufweist;
wobei
ein Abstand zwischen der Anschlussvorrichtung und dem Schwerpunkt des Transportmittels größer als ein Abstand zwischen der Anschlussvorrichtung und dem Schwerpunkt des Radvorderteils ist.

14. Das Wechselsystem nach Anspruch 12 oder 13, wobei
das Transportmittel, das Radvorderteil und der Fahrradrahmen ferner jeweils mindestens ein Rad umfassen; und
wobei der Radstand zwischen dem zumindest einen Rad am Transportmittel und dem Rad am Fahrradrahmen größer ist als ein Radstand zwischen dem Rad am Radvorderteil und dem Rad am Fahrradrahmen.

15. Das Wechselsystem nach einem der Ansprüche 12 bis 14, wobei die Anschlussvorrichtung die Anschlussvorrichtung nach einem der Ansprüche 1 bis 6 ist.
